# EUROPEAN PATENT APPLICATION

(11) **EP 0 935 395 A2**
(43) Date of publication of application: **11.08.1999**
(21) Application number: 99300822.6
(22) Date of filing: 04.02.1999
(51) Int. Cl.: H04N 7/24, H04N 7/50

(54) **Video encoding methods and apparatus**

(30) Priority: 06.02.1998 JP 2614298
(71) Applicant: SONY CORPORATION, Tokyo 141 (JP)
(72) Inventor: Kato, Motoki, Shinagawa-ku, Tokyo 141 (JP)
(74) Representative: Pilch, Adam John Michael

(57) **Abstract**

A moving picture encoding method and apparatus for processing digital signals, and a recording medium, in which, when it is specified to skip a portion of a moving picture program to be reproduced, the program portion lying forwardly of a skipping start point and the program portion lying backwardly of a skipping end point are to be reproduced seamlessly. An analysis unit assumes that a GOP (GOP-new-0) is encoded with a pre-set quantity of allocated bits, and calculates a bit storage quantity (boe) of a virtual decoder after the end of decoding of the last picture of the GOP (GOP-new-0) (step S24). The analysis unit then compares the size of the bit storage quantity (boe) to the size of the bits (step S25). If the size of the bit storage quantity (boe) is found to exceed the size of the bits, a picture B0 of the GOP (GOP-0) is re-encoded to an I-picture I0x, while an out-point picture B1 is re-encoded to a p-picture P1x, in order to generate a new GOP (GOP-new-0).

## Description

This invention relates to moving picture encoding methods, apparatus and recording media, such as those for processing digital signals encoded by orthogonal transform, such as discrete cosine transform.

Recently, the so-called MPEG (Moving Picture Experts Group) or MPEG2, which combines the encoding of picture signals for compression with redundancy reducing processing by orthogonal transform such as discrete cosine transform (DCT) with motion compensation MC, has entered widespread use.

For doing the predictive coding employing motion compensation, the MPEG2 uses a structure of group-of-pictures (GOP) comprised of three elements termed I-, P- and B-pictures. The I-picture (intra-picture) is produced by intra-picture encoding without having reliance to predictive coding from a previous picture.

It is noted that, if only pictures produced using predictive coding are arrayed, pictures cannot be retrieved instantaneously on random accessing. Therefore, accessing references are periodically produced to cope with random accessing. That is, the I-pictures serve for maintaining the GOP independency.

The frequency of appearance of I-pictures is determined by the performance of the random accessing required by the application. Usually, one I-picture is used in each GOP, such that, if two GOPs appear per second, one I-picture is used per 15 frame pictures. The GOP is a group of pictures from an I-picture to the next I-picture. The picture prediction is made among the pictures making up one such group.

P-pictures (predictive-coded pictures), made by predictive coding from the directly previous picture, are obtained on the basis of an I-picture. In distinction from the I-picture (intra-frame coded picture), the P-picture is defined as an inter-frame forward predicted picture. B-pictures (bi-directionally predictive coded pictures) are made by prediction from two pictures, namely a temporally forward picture and a temporally backwards picture.

Scrutinizing further into the relation among the I-, P- and B-pictures in a GOP, a first-stage prediction from the I-picture lying at the leading end of the GOP is made in the forward direction to produce a P-picture. This P-picture is arrayed as skipping a B-picture produced later.

The second stage of prediction is made from two pictures, that is the initial I-picture and the P-picture encoded at the first stage. That is, one or plural B-pictures are produced by bi-directional prediction. Further, a B-picture is similarly produced between the first and second P-pictures. At the time of decoding, motion compensation for the B-picture is achieved using two reference pictures by two motion vectors and two reference pictures, that is a forward reference picture and a backward reference picture.

The bi-directional prediction, characteristic of MPEG, gives a high prediction efficiency in prediction by employing two pictures, that is a temporally past picture and a temporally future picture.

Meanwhile, there are occasions wherein it is specified to skip part of the moving picture program by the MPEG2 in reproduction. Due to the above-described MPEG2 encoding method, the MPEG2 pictures are usually reproduced by predictively referring to pictures temporally ahead and in back of a picture in question.

Therefore, it is usually required to make reference for prediction to a picture at back of a skipping start point and a picture ahead of the skipping end point, so that it is difficult to reproduce pictures seamlessly from the skipping start point to the skipping end point.

If, for example, the in-point picture is a B-picture, it is necessary to previously decode the I- or P-picture required for decoding this B-picture. In this case, there is a risk of interruption of reproduced pictures.

It is therefore an aim of at least an embodiment of the present invention to provide a moving picture encoding method and apparatus whereby, if it is specified to skip a portion of a moving picture program for reproduction, a GOP ahead of a skipping start point and a GOP at back of the skipping end point can be re-encoded efficiently in order to seamlessly reproduce the program ahead of the skipping start point and a program at back of the skipping start point.

It is another aim of an embodiment of the present invention to provide a recording medium having a corresponding control program recorded thereon.

In one aspect, the present invention provides a moving picture encoding method including a re-constructing step for re-constructing the input video stream by re-encoding the pictures of the group of pictures containing the out-point picture beginning from the initial display picture of the group of pictures up to the out-point picture into inter-picture predictive-coded pictures that can be predicted from pictures of another group of pictures displayed directly before the group of pictures containing the out-point picture, for re-construction into a group of pictures that can be decoded without having predictive reference to display pictures lying at back of the out-point picture.

In another aspect, the present invention provides a moving picture encoding device including re-constructing means for re-constructing the input video stream by re-encoding the pictures of the group of pictures containing the out-point picture from the initial display picture up to the out-point picture into inter-picture predictive-coded pictures that can be predicted from pictures of another group of pictures displayed directly before the group of pictures containing the out-point picture, for re-constructing the picturers into a group of pictures that can be decoded without having predictive reference to display pictures lying backwardly of the out-point picture.

In a further aspect, the present invention provides a recording medium having recorded thereon a control program for re-constructing the input video stream by re-encoding the pictures ofthe group ofpictures containing the out-point picture from the initial display picture of the group of pictures up to the out-point picture into inter-picture predictive-coded pictures that can be predicted from pictures of another group of pictures displayed directly before the group of pictures containing the out-point picture, for re-constructing the pictures into a group of pictures that can be decoded without having predictive reference to display pictures lying backwardly of the out-point picture.

In a further aspect, the present invention provides a moving picture encoding method including a re-constructing step of re-constructing the input video stream by re-encoding the first intra-coded picture of a group of pictures displayed directly backwardly of a group of pictures containing the in-point picture to an inter-picture predictive-coded picture that is predicted from a picture of the group of pictures containing the in-point picture, for re-constructing the pictures into a group ofpictures that can be decoded without having predictive reference to display pictures lying ahead of the in-point picture.

In a further aspect, the present invention provides a moving picture encoding device re-constructing means for re-constructing the input video stream by re-encoding the first intra-coded picture of a group of pictures displayed directly backwardly of a group of pictures containing the in-point picture to an inter-picture predictive-coded picture that is predicted from a picture of the group of pictures containing the in-point picture, for re-constructing the pictures into a group of pictures that can be decoded without having predictive reference to display pictures lying ahead of the in-point picture.

In a further aspect, the present invention provides a recording medium having recorded thereon a control program for the control program re-constructs the input video stream by re-encoding the first intra-picture coded picture of a group ofpictures displayed directly backwardly of the group of pictures containing the in-point picture to an inter-picture predictive-coded picture predicted from a picture of the group of pictures containing the in-point picture, for re-constructing the pictures into a group ofpictures that can be decoded without having predictive reference to display pictures lying ahead of the in-point picture.

In a further aspect, the present invention provides a moving picture encoding method including a re-constructing step of re-constructing, in an input bitstream, a group of pictures of a unit domain containing the first point up to the first point in a display sequence, and a group of pictures of a unit domain directly previous to the group of pictures containing the first point in the display sequence, into a first group of pictures that can be decoded without predictive reference to a picture lying backwardly of the first point, and of re-constructing pictures beginning from the second point in the display sequence of a group of pictures of a unit domain containing the second point, and another group ofpictures ofthe unit domain directly following the group of pictures containing the second point in the display sequence, into a second group of pictures that can be decoded without predictive reference to pictures lying forwardly of the second point.

In a further aspect, the present invention provides a moving picture encoding device including re-constructing means for re-constructing, in an input bitstream, a group of pictures of a unit domain containing the first point up to the first point in a display sequence, and a group of pictures of a unit domain directly previous to the group of pictures containing the first point in the display sequence, into a first group of pictures that can be decoded without predictive reference to a picture lying backwardly of the first point, and for re-constructing pictures beginning from the second point in the display sequence of a group of pictures of a unit domain containing the second point, and another group of pictures of the unit domain directly following the group of pictures containing the second point in the display sequence, into a second group of the second point.

In a further aspect, the present invention provides a recording medium having recorded thereon a control program formulated for re-constructing, in an input bitstream, a group of pictures of a unit domain containing the first point up to the first point in a display sequence, and a group of pictures of a unit domain directly previous to the group of pictures containing the first point in the display sequence, into a first group of pictures that can be decoded without predictive reference to a picture lying backwardly of the first point, and for re-constructing pictures beginning from the second point in the display sequence of a group of pictures of a unit domain containing the second point, and another group of pictures of the unit domain directly following the group of pictures containing the second point in the display sequence, into a second group of the second point.

In a further aspect, the present invention provides a moving picture encoding method including a re-constructing step of decoding a group of pictures of the unit domain containing the first point if the first point is the bidirectionally predictive-coded picture to re-encode pictures up to the first point in the display sequence, and of decoding a group of pictures of the unit domain containing the second point if the second point is a forwardly predictive-coded picture or a bidirectionally predictive-coded picture, to re-encode pictures lying backwardly of the second point in the display sequence.

In a further aspect, the present invention provides a moving picture encoding device including re-constructing means for decoding a group of pictures of the unit domain containing the first point if the first point is the bidirectionally predictive-coded picture to re-encode pictures up to the first point in the display sequence, and for decoding a group of pictures of the unit domain containing the second point if the second point is a forwardly predictive-coded picture or a bidirectionally predictive-coded picture to re-encode pictures lying backwardly ofthe second point in the display sequence.

In yet another aspect, the present invention provides a recording medium having recorded thereon a control program for decoding a group of pictures of the unit domain containing the first point if the first point is the bidirectionally predictive-coded picture to re-encode pictures up to the first point in the display sequence, and for decoding a group of pictures of the unit domain containing the second point if the second point is a forwardly predictive-coded picture or a bidirectionally predictive-coded picture, to re-encode pictures lying backwardly of the second point in the display sequence.

With the moving picture encoding method, moving picture encoding device and the recording medium according to the present invention, an input video stream is re-constructed by re-encoding the pictures of the group of pictures containing the out-point picture beginning from the initial display picture of the group of pictures up to the out-point picture into inter-picture predictive-coded pictures that can be predicted from pictures of another group of pictures displayed directly before the group of pictures containing the out-point picture, for re-constructing the pictures into a group of pictures that can be decoded without having predictive reference to display pictures lying at back of the out-point picture. Thus, the portion of the input bitstream lying forwardly of a skipping start point can be efficiently encoded to enable seamless reproduction ofthe program portion lying forwardly ofthe skipping start point and the program portion lying backwardly of the skipping end point.

With the moving picture encoding method, moving picture encoding device and the recording medium according to the present invention, an input video stream isreconstructed by re-encoding the first intra-coded picture of a group of pictures displayed directly backwardly of a group of pictures containing the in-point picture to an inter-picture predictive-coded picture that is predicted from a picture of the group ofpictures containing the in-point picture, for re-constructing the pictures into a group ofpictures that can be decoded without having predictive reference to display pictures lying ahead of the in-point picture. Thus, the portion of the input bitstream lying forwardly of a skipping start point can be efficiently encoded to enable seamless reproduction ofthe program portion lying forwardly ofthe skipping start point and the program portion lying backwardly of the skipping end point. Also, two groups of pictures can be grouped together and an I-picture, for example, of the backward side group of pictures can be changed to a P-picture to diminish the quantity of the encoding bits.

With the moving picture encoding method, moving picture encoding device and the recording medium according to the present invention, a group ofpictures of a unit domain containing the first point up to the first point in a display sequence, and a group of pictures of a unit domain directly previous to the group of pictures containing the first point in the display sequence, is re-constructed into a first group of pictures that can be decoded without predictive reference to a picture lying backwardly of the first point, and a group of pictures beginning from the second point in the display sequence of a group of pictures of a unit domain containing the second point, and another group of pictures of the unit domain directly following the group of pictures containing the second point in the display sequence, are re-constructed into a second group of pictures that can be decoded without predictive reference to pictures lying forwardly of the second point. Therefore, if it is specified to skip a portion of the moving picture program in reproducing it, the program portion lying ahead of the skipping start point and the program portion lying backwardly of the skipping end point can be reproduced seamlessly to enable efficient encoding of the program portions lying forwardly ofthe skipping start point and backwardly ofthe skipping end point. Also, two groups of pictures can be grouped together and an I-picture, for example, of the backward side group of pictures can be changed to a P-picture to diminish the quantity of the encoding bits.

With the moving picture encoding method, moving picture encoding device and the recording medium according to the present invention, a group of pictures of the unit domain containing the first point is decoded if the first point is the bidirectionally predictive-coded picture to re-encode pictures up to the first point in the display sequence, and a group of pictures of the unit domain containing the second point is decoded if the second point is a forwardly predictive-coded picture or a bidirectionally predictive-coded picture, to re-encode pictures lying backwardly of the second point in the display sequence. Therefore, if it is specified to skip a portion of the moving picture program in reproducing it, the program portion lying ahead of the skipping start point and the program portion lying backwardly of the skipping end point can be reproduced seamlessly to enable efficient encoding of the program portions lying forwardly of the skipping start point and backwardly ofthe skipping end point.

The invention will now be described by way of example with reference to the accompanying drawings, throughout which like parts are referred to by like references. and in which:

Fig.1 illustrates re-encoding of a bitstream.

Fig.2 is a time chart showing a bit storage quantity of a VBV buffer.

Fig.3 shows the method of moderating the constraint of the encoding conditions.

Fig.4 shows a system (multiplexed) stream.

Fig.5 is a flowchart showing a series of process steps of a moving picture encoding method.

Fig.6 schematically shows the structure of the entire moving picture encoding device according to an embodiment of the invention.

Fig.7 shows an example of re-encoding of GOPs ahead and at back of an editing point.

Fig.8 is a block diagram showing the structure of a moving picture recording/reproducing apparatus embodying the second aspect of the present invention.

Fig.9 is a flowchart for illustrating the sequence of re-encoding and re-multiplexing out- and in-points in the moving picture recording/reproducing apparatus shown in Fig.8.

Fig. 10 is a flowchart for illustrating the video re-encoding sequence on the out-point side.

Fig.11A illustrates the array of encoded bitstream and Figs.11B to D illustrate the arrays of the encoded bitstreams on editing out-points by re-encoding.

Fig.12 shows the bit storage volume of an imaginary buffer on editing by re-encoding.

Fig.13 shows a bit storage volume of a buffer of an imaginary buffer when assumed that re-encoding is done with the picture B11 of a GOP-0 as I10x.

Fig. 14 shows a bit storage quantity of an imaginary buffer on encoding by re-encoding.

Fig. 15 is a flowchart for illustrating the sequence of re-encoding the in-point in the moving picture recording/reproducing apparatus.

Fig. 16A illustrates the array of encoded bitstream and Figs. 16B to D illustrate the arrays of the encoded bitstreams on re-encoding in-points.

Fig.17 shows the bit storage quantity of the imaginary buffer on re-encoding in-points.

Fig.18 shows a bit storage volume of a buffer of an imaginary buffer when assumed that re-encoding is done with the picture Im2 of a GOP-m as Im2x.

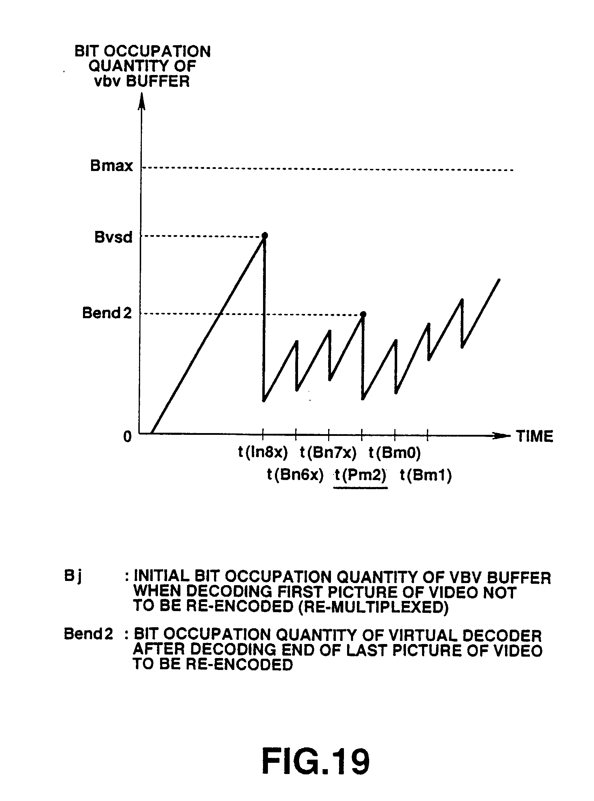

Fig. 19 shows the bit storage quantity of the imaginary buffer on re-encoding in-points.

Referring to the drawings, the moving picture encoding method and apparatus and a recording medium according to the present invention will be explained in detail.

A first embodiment of the present invention is first explained.

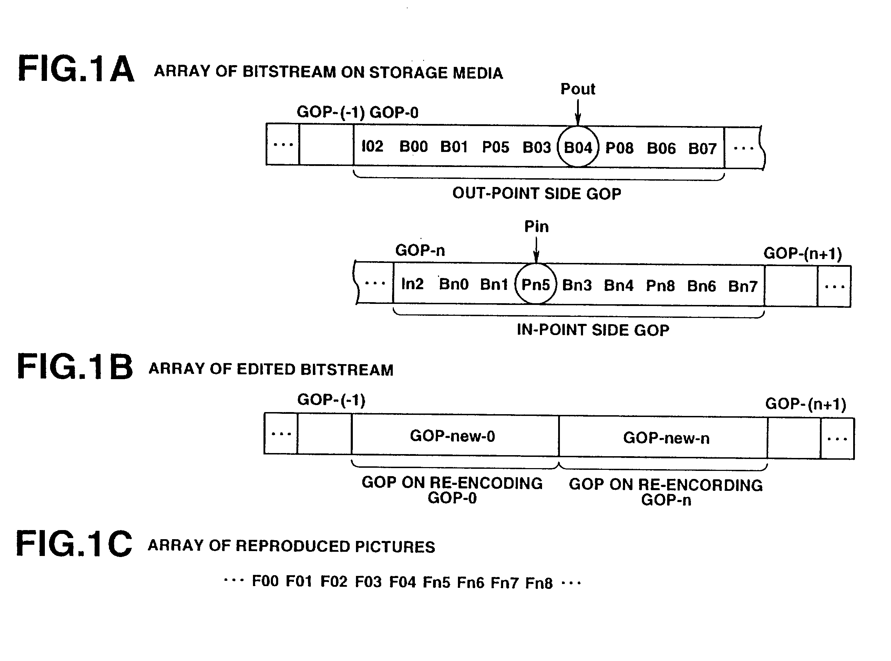

As shown by an array of an encoded bitstream in Fig.1A, the processing of a bitstream according to the present invention is done such that, on designating the reproduction under skipping part of a moving picture program, a program lying forwardly of an out-point as a first point as the skipping start point in the display sequence corresponding to the time axis direction and a program lying at back of an in-point as a second point which is the skipping end point can be reproduced seamlessly.

In the present moving picture encoding method, a moving picture program is given as an encoded bitstream of the MPEG2 standard.

The encoded bitstream of the MPEG2 standard is based on a group-of-pictures (GOP), which is a group of pictures of a number of encoded pictures in a preset sequence, as a unit. That is, at A in Fig. 1, an out-point picture B04 is contained in a GOP-0, which is an out-point side GOP contiguous to GOP-(-1). To this in-point side GOP is contiguous a GOP-(n+1). It is noted that GOP-i means an ith GOP along the time axis corresponding to the picture display sequence.

Each GOP is made up of an intra-picture (I-picture), which is a reference picture obtained on encoding a picture without predictive coding from other pictures, a predictive coded picture (P-picture), which is a forward predictive-coded picture in which the pictures are encoded using predictive coding in the forward direction in the display sequence, and a bi-directionally coded picture (B-picture), which is a picture encoded using forward predictive coding and backward predictive coding.

Each GOP is made up of an I-picture, followed by plural P- and B-pictures, in a pre-set order, in the picture display sequence.

In encoded bitstreams, shown at A in Fig. 1, a GOP GOP-0, which is an out-point side GOP, is made up of pictures arrayed in the order of I02, B00, B01, P05, B03, B04, P08, B06 and B07, while a GOP GOP-n, which is an in-point side GOP, is made up of pictures arrayed in the order of In2, Bn0, Bn1, Pn5, Bn3, Bn4, Pn8, Bn6 and Bn7.

It is noted that Iij denotes an I-picture of an ith GOP having a display order equal to j, while Pij and Bij denote a P-picture and a B-picture of a jth GOP, respectively, having a display order equal to i and a display order equal to j, respectively.

In the encoded bitstream, shown at A in Fig. 1, it is assumed to be required to reproduce pictures lying forwardly of an out-point and lying backwardly of an in-point in the display sequence seamlessly.

To this end, the GOP GOP-0, which is the out-point side GOP containing B04 as an out-point picture Pout, is decoded. Then, this GOP GOP-0 is re-encoded so that B04, which is the out-point picture Pout, can be decoded without having to make reference for prediction to an encoded picture lying backwardly in the display sequence. That is, in the array of the encoded bitstreams following the re-encoding shown in Fig.1B, the GOP GOP-0, which is an out-point side GOP shown in Fig.1A, corresponds to a re-encoded GOP-new-0.

On the other hand, the GOP GOP-n, which is the in-point side GOP containing Pn5 as an in-point picture Pout, is decoded. Then, this GOP GOP-n is re-encoded so that Pn5, which is the in-point picture Pin, can be decoded without having to make reference for prediction to an encoded picture lying forwardly in the display sequence. That is, in the array of the encoded bitstreams following the re-encoding shown in Fig.lB, the GOP GOP-n, which is an out-point side GOP shown in Fig.1A, corresponds to a re-encoded GOP-new-n.

As a result of this re-encoding of the in-point side GOP and the out-point side GOP, frames lying forwardly of the in-point and those lying backwardly of the out-point are seamlessly reproduced, as indicated by an array of reproduced frames F00, F01, F02, F03, F04, Fn5, Fn6, Fn7, Fn8, shown in Fig.1C.

It is noted that GOP-new-i means a new GOP produced by re-encoding certain pictures of the GOP GOP-i.

The GOP GOP-new-0 in this instance is a new GOP produced from frames F00, F01, F02, F03, F04, obtained by decoding pictures B00, B01, B02, B03, B04 of GOP-0. The GOP GOP-new-n is a new GOP produced from frames Fn5, Fn6, Fn7, Fn8 obtained by decoding pictures Pn5, Bn6, Bn7, Pn8 of GOP-n. The frame Fij correspond to a picture having corresponding suffixes.

The above-described sequence of operations concerning a bitstream of the MPEG system constitutes a re-construction process.

The re-encoding of the out-point side GOP is specifically explained.

If, for example, the out-point picture is an I- or P-picture, the out-point side GOP need not necessarily be decoded to be then re-encoded, it being sufficient to remove pictures downstream of the P- or I-picture next to the out-point picture.

If, in the array of the encoded bitstream shown in Fig.1A, the picture P05 of the GOP GOP-0, as an out-point side GOP, is an out-point picture, pictures downstream of the picture P08 can be removed to create a GOP GOP-new-0 as shown below: GPO-0 : IO2 B00 B0I P05 B03 B04 P08 B06 B07 GO-new-0 : IO2 B00 B01 P05 B03 B04

Ifthe out-point picture is a B-picture, it is necessary to decode and subsequently encode the out-point side GOP. That is, the GOP is re-encoded so that the out-point picture can be decoded without predictive reference to a picture lying backwardly of the out-point picture in the display sequence.

If, for example, B04 of the GOP GOP-0, as an out-point side GOP, is an out-point picture Pout, as shown in Fig.1A, re-encoding is made such that pictures B03, B04, predictively encoded from the pictures I02, P05, can be produced without reference for prediction.

First, I02, B00, B01, P05, B03 and B04 are decoded to frames F00, F01, F02, F04, F05, after which the frames F00, F01, F02, F03, F04 are re-encoded, as shown below:
GOP-0: I02 B00 B01 P05 B03 B04 P08 B06 B07
decoded pictures of GOP-0: F00 F01 F02 F03 F04 F05.

Then, in a GOP GOP-new-0(a), F03 and F04 are re-encoded into P-pictures P03 and P04, which are obtained on predictive coding from I02 and P03, respectively, whereas, in a GOP GOP-new-0(b), F04 is re-encoded into a P-picture P04,while F03 is re-encoded into a B-picture B03 which is predictively coded from I02 and P04, as shown below:
GOP-new-0(a): I02 B00 B01 P03 P04, or
GOP-new-0(b): I02 B00 B01 B04 B03,

it being noted that I02, B00 and B02 in the GOP GOP-new-0(a) and in the GOP GOP-new-0(b) are preferably copied from the GOP GOP-0 without using the encoding.

It should noted that the suffix letters I, B and P correspond to pictures having the same suffixes.

The re-encoding of the in-point side GOP is specifically explained.

If the in-point picture is an I-picture, the in-point side GOP need not necessarily be decoded to be then re-encoded.

In this case, it suffices if the pictures downstream of the in-point picture are directly copied and used in this form.

If, for example, the picture In2 of the GOP GOP-n, as an in-point side GOP, shown in Fig.1A, the pictures downstream of the picture In2 can directly serve as a GOP GOP-new-n.

If the in-point picture is a P- or B-picture, it is necessary to re-encode the in-point side GOP. The GOP is re-encoded so that the in-point picture can be decoded without having predictive reference to a picture lying forwardly of the in-point picture in the display sequence.

If, for example, Pn5 is an in-point picture Pin, as in the GOP GOP-n in Fig.1A, re-encoding is done so that Pn5 predictively encoded from In2 can be obtained without reference for prediction to In2. First, the pictures In2, Bn0, Bn1, Pn5, Bn3, Bn4, Pn8, Bn6 and Bn7 of the GOP GOP-n are decoded to frames Fn0, Fn1, Fn2, Fn3, Fn4, Fn5, Fn6, Fn7, Fn8 and subsequently the frames Fn5, Fn6, Fn7, Fn8 are re-encoded.

The suffixes I, B and P in the GOP GOP-new-n correspond to the pictures F having the same suffixes. In the GOP GOP-new-n, Fn5 is re-encoded to an I-picture In5, as shown below:
GOP-n: I02, Bn0, Bn1, Pn5, Bn3, Bn4, Pn8, Bn6, Bn7
decoded pictures of GOP-n: Fn0, Fn1, Fn2, Fn3, Fn4, Fn5, Fn6, Fn7, Fn8 GOP-new-0: In5, Pn8, Bn6, Bn7

If, in another example, Bn3 of the GOP GOP-n is an in-point picture, it is recommendable to re-encode Fn5 to an I-picture In5 as follows:
GOP-n: I02, Bn0, Bnl, Pn5, Bn3, Bn4, Pn8, Bn6, Bn7
decoded pictures of GOP-n: Fn0, Fn1, Fn2, Fn3, Fn4, Fn5, Fn6, Fn7, Fn8 GOP-new-n: In5, Bn3, Bn4, Pn8, Bn6, Bn7.

That is, in the GOP GOP-n, the first P-picture downstream of the in-point picture Bn3 in the display sequence is re-encoded into an I-picture In5.

If, in the GOP GOP-(n+1), next following the re-encoded GOP GOP-new-n, closed_gop =0, the leading end B-picture of the GOP GOP-(n+1) refers to the original GOP-n picture for prediction.

It is noted that closed_gop is a 1-bit flag in the MPEG GOP header and specifies the type ofprediction used in a B-picture directly following the first I-picture lying next to the GOP header.

The closed_gop set to 1 indicates that the B-picture directly following the first I-picture consecutive to the GOP header has been encoded using only the backward prediction or intra-coding.

For example, if, in the following picture string:
Ia0 Pa3 Ba1 Ba2| Ix2 Bx0 Bx1 Px5 Bx3 Bx4
where | stands for a GOP boundary. Ifthe closed_gop ofthe GOP beginning from Ix2 is set to "1", it indicates that Bx0 and Bx1 are encoded using only the backward prediction from Ix2 or intra-coding, without using the forward prediction from Pa3 nor bidirectional prediction from Pa3 and Ix2.

If the closed_gop is set to 0, the GOP in question refers to the picture of the directly previous GOP.

The GOP GOP-new-n, obtained on re-encoding the GOP GOP-n, differs in picture quality from the original GOP GOP-n, so that, strictly speaking, there is produced a possibility of the mismatching in the picture quality of the leading B-picture of the GOP GOP-(n+1). It may, however, be presumed that this scarcely affects the picture quality of the leading B-picture of the GOP GOP-(n+1). If this effect is to be retained to be grave, it is of course possible to re-encode the leading B-picture of the GOP GOP-(n+1) used for predictive coding of the original GOP-picture.

The constraint imposed on the re-encoding condition is now explained.

If the GOP GOP-0 as an out-point side GOP and the GOP GOP-n as an in-point side GOP are respectively encoded into a GOP GOP-new-0 and a GOP GOP-new-n, it is necessary to take caution so that, on reproducing the GOP GOP-n to the GOP GOP-(n+1), there is produced no failure ofthe VBV buffer as an imaginary buffer of the decoder defined in MPEG. It is noted that failure of the VBV buffer means its overflowing or underflowing.

It is noted that if the application reproducing the re-encoded bitstream is able to control the input rate to the VBV buffer to prevent buffer overflow, it is only sufficient not to cause the buffer underflow. In the following example, the re-encoding condition under which there is caused no buffer underflowing is explained.

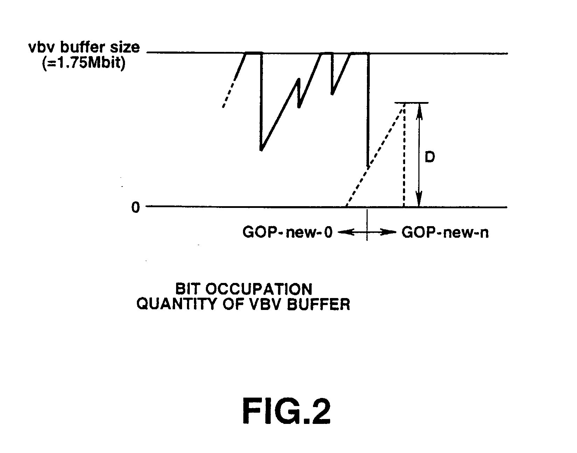

In this case, the maximum constraint is on the encoding bit quantity for the first I-picture of the GOP GOP-new-n. That is, in the bit storage quantity of the VBV buffer of Fig.2, with the buffer size of 1.75 Mbits, the encoding bit quantity for the first I-picture of the GOP GOP-new-n, which is the re-encoded version of the GOP GOP-n, as an in-point side GOP containing an in-point picture, needs to be not larger than D in Fig.2.

The larger the input bitrate of the VBV buffer, the smaller is the constraint when re-encoding the GOP GOP-new-n. In general, the maximum bitrate as determined by the application is the input bitrate of the VBV buffer.

Meanwhile, in the so-called DVD-Video, or MPEG2 MP@ML (main profile/main level) conforming toe the digital satellite broadcast, the maximum value of the input bitrate of the VBV buffer is 15 Mbps. If 15 Mbps can be obtained in case of digital outputting of the bitstream on a digital bus of the IEEE1394 standard by isochronous transfer, the input bitrate ofthe VBV buffer at the time ofre-encoding can be set to 15 bps. In actuality, it is necessary to use such a bitrate corresponding to this input bitrate plus the audio or multiplexing overhead bitrate.

The minimum value of the bit quantity of the first I-picture of the GOP GOP-new-n, that is the worst pattern, is (input bitrate ofthe VBV buffer/frame rate). In such case, it is difficult to encode the GOP GOP-new-n to high picture quality. The condition close to this worst pattern is likely to occur if the tout-point picture is an I-picture or if the number of pictures of the GOP GOP-new-0 is as small as two to three.

The method for moderating the re-encoding constraint as described above is explained.

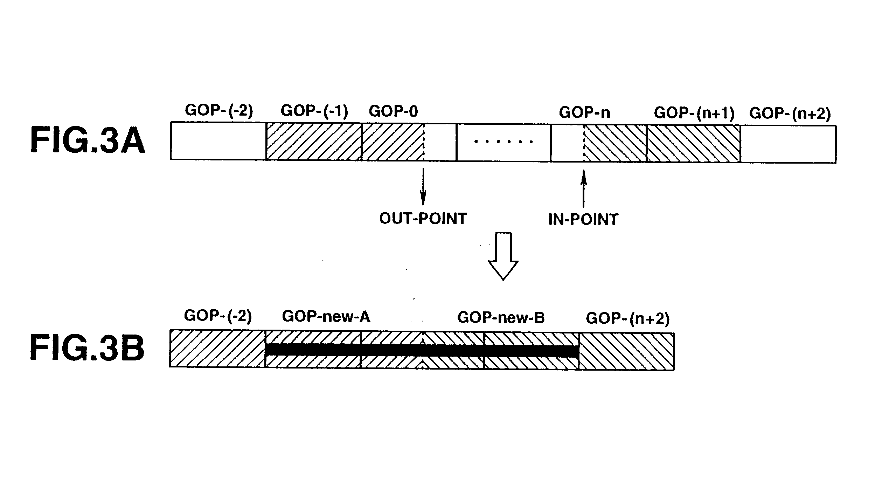

If pictures shown shaded in Fig.3A, that is if two GOPs before the editing out-point GOP-(-1) and GOP-0 and two GOPs after the in-point, that is GOP-n and GOP-(n+1), are re-encoded to give a GOP GOP-new-A and a GOP GOP-new-B, as shown in Fig.3B, the encoding constraint on pictures downstream of the in-point picture is moderated to some extent.

For encoding to high picture quality, an I-picture is in need of an encoding bit quantity significantly larger than that for P- or B-pictures. However, if an interval between neighboring I-pictures is as small as two to three, it is necessary to reduce the encoding bit quantity for the I-picture from the bit quantity required for realizing high picture quality, in order to prevent underflowing of the VBV buffer. In such case, it is difficult to encode the GOP to high picture quality.

If, in the out-point side program, shown in Fig.1, the out-point picture is an I-picture, or the number of pictures of the GOP GOP-new-0 is as small as two to three, or if, in the in-point side program, the number of pictures of the GOP GOP-new-n is as small as two to three, the risk is high that the condition close to the above-mentioned worst pattern is likely to be produced. It is difficult in this case to encode the GOPs GOP-new-0 or GOP-new-n to high picture quality.

In such case, the picture quality can be improved by re-encoding pictures shown shaded in Fig.3, that is two GOPs before the editing out-point picture, to a sole GOP GOP-new-A, as for the out-point side program, and by re-encoding the pictures shown shaded in Fig.3, that is two GOPs before the editing out-point picture, to a sole GOP GOP-new-A, as for the in-point side program.

An instance of improving the picture quality is shown for the out-point side program.

It is initially assumed that the GOPs GOP-(-1) and GOP-0 are constructed as follows:
I2 B0 B1 P5 B3 B4 P8 B6 B7 Pb B9 Ba | I2 B0 B1 P5 B3 B4 P8 B6 B7 Pb B9 Ba
where | stands for the GOP boundary, such that the GOP GOP-(-1) and the GOP GOP-0 are on the left and right sides of the symbol "|".

If, with I2 of the GOP GOP-0 as an out-point picture, the GOP GOP-0 is re-encoded, the GOP GOP-new-0 can be constructed as follows:
I2 B0 B1 P5 B3 B4 P8 B6 B7 Pb B9 Ba | I2 B0 B1
where the GOP GOP-new-0 lies on the right side of the symbol "|".

If, for improving the picture quality, the two GOPs lying on the out-point side, that is GOP-(-1) and GOP-new-0, are re-encoded to GOP-new-A,
I2 B0 B1 P5 B3 B4 P8 B6 B7 Pb B9 Ba P2 B0 B1
is obtained in which the first I-picture I2 of the GOP GOP-0 containing the out-point picture (GOP-new-0) is re-encoded to a P-picture P2 which can be predicted from the picture of the GOP GOP-(-1) directly previous o the GOP-0.

An instance of picture quality improvement by re-encoding the in-point side program is hereinafter explained.

It is first assumed that the GOPs GOP-n and GOP-(n+1) are constructed as follows:
I2 B0 B1 P5 B3 B4 P8 B6 B7 Pb B9 Ba | I2 B0 B1 P5 B3 B4 P8 B6 B7 Pb B9 Ba
where the GOP GOP-n and the GOP GOP-(n+1) are on the left and right sides of the symbol "|".

If, with B9 of the GOP GOP-n as an in-point picture, the GOP GOP-n is re-encoded, the GOP GOP-new-n is constructed as follows:
Ib B9 Ba | I2 B0 B1 P5 B3 B4 P8 B6 B7 Pb B9 Ba where the GOP GOP-new-n lies on the left side of the symbol "|".

If, for improving the picture quality, the two GOPs lying on the in-point side, that is GOP-n and GOP-(n+1), are re-encoded to GOP-new-B,
Ib B9 Ba P2 B0 B1 P5 B3 B4 P8 B6 B7 Pb B9 Ba is obtained, in which the first I-picture I2 of the GOP-(n+1) indicated directly backwardly of the GOP-n containing the in-point picture B9 (GOP-new-n) is re-encoded to the picture P2 predicted from the picture GOP-n (GOP-new-n).

If limitations are imposed on the number of pictures of the GOP by the application, there are occasions wherein the lengths ofthe GOP-new-A and GOP-new-B exceed the limitations. In such case, it suffices if the GOPs, that is the GOP-new-A and GOP-new-B, are encoded in respective two GOPs.

For example, the out-point side program is
I2 B0 B1 P5 B3 B4 P8 B6 B7 Pb B9 Ba | I2 B0 B1
before improvement, and is
I2 B0 B1 P5 B3 B4 P8 B6 B7 | Ib B9 Ba P2 B0 B1 after improvement. That is, the two GOPs, namely the GOPs GOP-(-1) and GOP-new-0, are re-encoded in two GOPs, that is the GOP-new-Al and the GOP-new-A2.

Also, the in-point side program is
I2 B0 B1 | I2 B0 B1 P5 B3 B4 P8 B6 B7 Pb B9 Ba before improvement, and is
I2 B0 B1 | I5 B3 B4 P8 B6 B7 Pb B9 B after improvement. That is, the two GOPs, namely the GOPs GOP-(-1) and GOP-new-0, are re-encoded in two GOPs, that is the GOP-new-B1 and the GOP-newB2.

In these examples, the maximum number of the pictures of the GOP is limited to 12 by an application.

The system (multiplexed) stream is explained.

In the MPEG system, data for multiplexing are split into streams of suitable lengths, termed packets, and the ancillary information, such as headers, are appended thereto. The resulting packets are time-divisionally multiplexed and transferred in a switching fashion.

In the MPEG synchronization system, the information termed time stamps, specifying when to decode and reproduce data, is attached to the data every decoding reproducing unit termed an accessing unit. To the time stamps, time reference is afforded by the information termed the system clock reference (SCR).

The time stamps may be classed into the recording output time management information, termed the presentation time stamp (PTS), and the decoding management information termed decoding time stamp (DTS).

In the domain for re-encoding, system encoding is also renewed, so that time stamps are newly attached. However, in this state, there are produced discontinuities in the time stamps (SCR, PTS and DTS) on a system stream ahead and in back of the editing point.

For assuring continuity in the time stamps, it is necessary to re-multiplex the entire program to re-attach time stamps. However, re-multiplexing time is prolonged, depending on the programming time. Therefore, this method is not practical in an application, such as editing on a storage medium.

Therefore, the re-multiplexing domain is limited to the re-encoded domain and a time stamp is attached only to the new_stc domain. It is noted that the domains stc1 and stc2 are the same as the time stamps inherently attached to the multiplexed stream. For the new-stc domain, system encoding is performed using the system time clock (STC) continuous to stc1.

When decoding this system stream, the following measures are used on the system decoder side to assure seamless reproduction.

The system decoder is advised in advance of the point of occurrence of STC discontinuities stc1_PTS_end. It should be noted that stc1_PTS_end, as a point of STC discontinuity, is the sum of PTS of the last displayed picture of the GOP GOP-new-n on stc and the picture display time.

After the decoding of GOP-new-n has come to a close, the video decoder calculates the following STC offset to decode the picture of the GOP-(n+1) when the DTS of the picture less the STC offset is equal to the STC value.

The STC offset and the decoding time of the picture of the GOP GOP-(n+1) is given as follows:
STC offset = (PTS of an initially displayed picture of a GOP GOP- (n+1))-stc1_PTS_end
decoding time of a picture of a GOP GOP-(n+1) = DTS of a picture of a GOP GOP-(n+1) - STC offset

When the value of stc1_PTS_end is equal to the STC value, switching is made to the PTS of an initially displayed picture of the GOP GOP-(n+1). As from this time on, picture decoding occurs when the STC and the DTS of the picture are equal to each other.

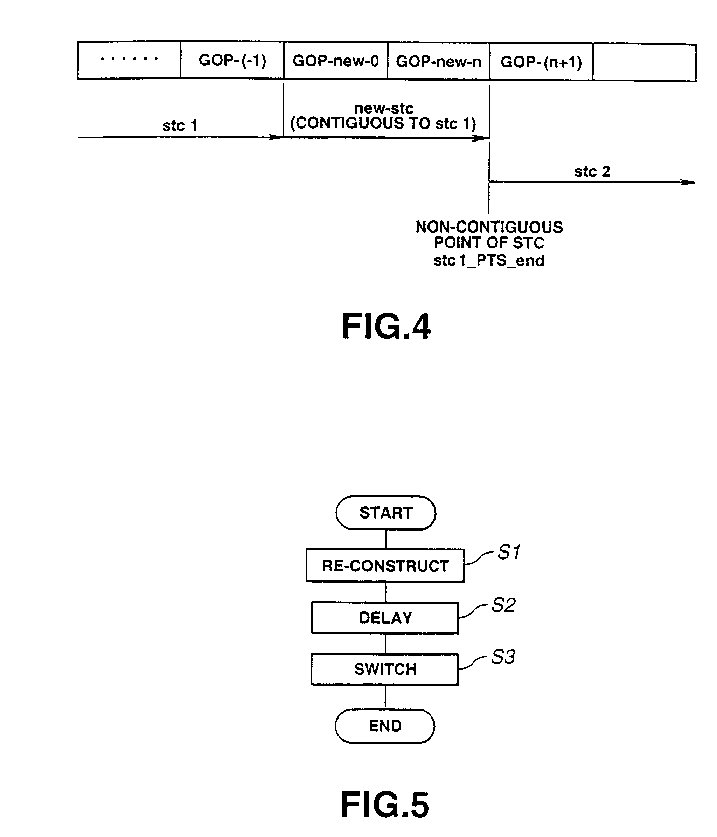

The process of the moving picture encoding methos is shown in a flowchart of Fig.5.

The step S1 is a re-constructing process of re-constructing a portion of an input bitstream of the MPEG2 standard up to an out-point in the display sequence of a GOP containing the out-point into a first GOP that can be decoded without reference for prediction to pictures downstream of the out-point, and re-constructing another portion ofthe input bitstream up to an in-point in the display sequence of another GOP containing the in-point into a second GOP that can be decoded without reference for prediction to pictures upstream of the out-point. Then , processing transfers to step S2.

At step S2, the input bitstream is delayed at least for a time duration necessary for re-construction in step S1. At the next step S3, switching is made between a bitstream from step S1 and a bitstream from step S2 on the GOP basis to output the selected bitstream. This terminates a sequence of operations.

A moving picture encoding device is hereinafter explained.

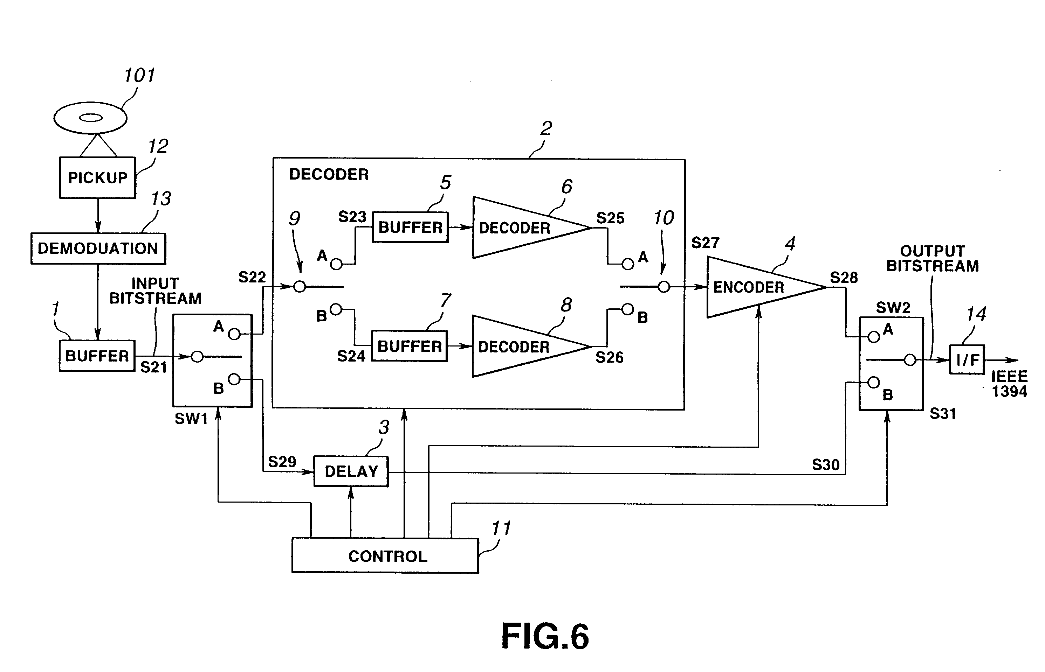

Referring to Fig.6, a moving picture encoding device includes a pickup 12 for reading out data recorded on an optical disc 101 as a recording medium, a demodulating circuit 13 for demodulating signals from the pickup 12 into a bitstream, and a buffer 1 for transiently storing the bitstream from the demodulating circuit 13.

The pickup 12 illuminates the laser light on a recording track on the signal recording surface of the optical disc 1 run in rotation to read out moving picture data recorded on the optical disc 101. The demodulating circuit 13 demodulates moving picture data supplied from the pickup 12 into a bitstream conforming to the MPEG2 standard. This input bitstream is transiently stored in the buffer 1.

The moving picture encoding device includes a switch SW1 for switching a bitstream S21 from the buffer 1 to one of the fixed terminals A or B, a decoder unit 2 for decoding the bitstream S21 from the fixed terminal A into picture signals and an encoder 4 for encoding picture signals S27 from the decoder unit 2.

The switch SW1 is responsive to control signals from the control circuit 11 to switch the bitstream S21 from the buffer 1 to one of the fixed terminals A or B. The decoder unit 2 decodes the bitstream S22 from the switch SW1 into picture signals S27 which are then encoded by the encoder 4 into a bitstream.

The decoder unit 2 includes a switch 9 for setting the bitstream S22 from the fixed terminal A of the switch SW1 to one of the fixed terminals A or B, a buffer 5 for transiently storing the bitstream S23 from the fixed terminal A of the switch 9 and a decoder 6 for decoding the bitstream from the buffer 5.

The decoder unit 2 includes a buffer 7 for transiently storing a bitstream S24 from the fixed terminal B ofthe switch 9, a decoder 8 for decoding the bitstream from the buffer 7, and a switch 10 for selecting one of the fixed terminal A fed with a decoded picture output S25 from the decoder 6 or the fixed terminal B fed with a decoded picture output S26 from the decoder 8.

The buffers 5 and 7 are memories for transiently storing an input stream to the decoder unit 2. These buffers 5 and 7 are used for decoding the bitstream of the MPEG2 standard in the downstream side decoders 6, 8. The capacity of these buffers 5 and 7 are prescribed by the standards of MPEG2 MP@ML (main profile/main level) and is, for example, of the order of 1.75 Mbits.

The bitstreams sent to these buffers 5 and 7 are switched by the switch 9 so as to be sent to one of the buffers 5 or 7.

The decoders 6, 8 decode the bitstream compressed in accordance with the MPEG system to generate digital picture data. These decoders 6 and 8 decode the pictures in accordance with the decoding time control information (DTS) attached to the respective pictures of the encoded data.

The decoder unit 2 is under control by the control circuit 11 which manages the bit storage quantity of the buffer 7 to control the bitrate of the bitstream to be read. During skip reproduction, the control circuit 11 changes over the state of the switch SW1 at a timing of interruption between a stream containing an out-point picture and another stream containing an in-point picture.

The decoder unit 2 includes two decoders 6 and 8, for simultaneously encoding the bitstreams S23 and S24. These decoders 6 and 8 decode the bitstream on the GOP basis for interconnecting the in-point and the out-point in the bitstream.

The switch 10 is timed to the control signals of the control circuit 11 to switch between signals of the decoders 6 and 8 to output the selected signal to the encoder 4.

The moving picture encoding device also includes a delay circuit 3 for delaying the bitstream S29 from the fixed terminal B of the switch SW1, an encoder 4 for encoding the picture signals S27 outputted by the switch 10 of the decoder unit 2 to a bitstream S28 and a switch SW2 for switching between a fixed terminal A fed with the bitstream S28 from the encoder 4 and a fixed terminal B fed with the bitstream S30 from the delay circuit 3 to select one of these fixed terminals A or B.

The delay circuit 3 sends the bitstream S29 from the fixed terminal B of the switch SW1 with a pre-set delay to the fixed terminal B of the switch SW2. The delay time in the present embodiment is 4-frame time, as will be explained subsequently.

The decoder unit 2 and the encoder 4 constitute re-encoding means for decoding and subsequently encoding an input bitstream. The encoder 4 re-encodes only pictures decoded by the decoder unit 2 and which are required in connection with the in-point and the out-point.

The moving picture encoding device includes an interfacing circuit 14 for converting a bitstream S41 from a switch SW2 and a control circuit 11 for controlling the interfacing circuit 14, a switch SW1, a decoder unit 2, a delay circuit 3, an encoder 4 and a switch SW1.

An interfacing circuit 214 converts the bitstream from the switch SW2 into data of the digital bus form of the IEEE 1394 standard to output the converted data to outside.

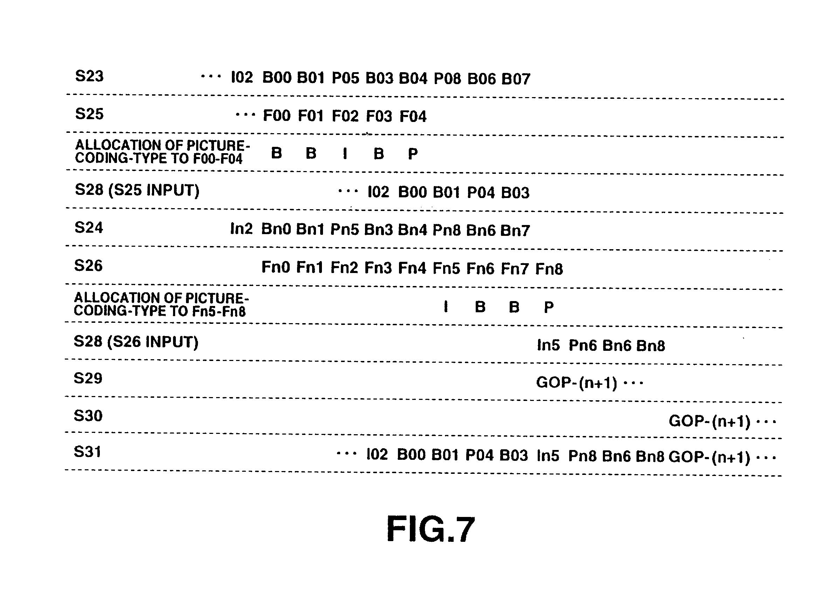

The signals of respective portions of the moving picture encoding device are explained by simultaneously referring to Fig.7.

To the buffer 5 of the decoder unit 2 is entered an array of pictures I02, B00, B01, P05, B03, B04, B06, B07, as a bitstream S23. This bitstream S23 is decoded by the decoder 6 into picture signals S25. These picture signals contain frames F00, F01, F02, F03 and F04.

The picture coding types, allocated to these frames, are B, B, I, B, P, in agreement with the types of the original pictures. The delay of picture signals S25 from the bitstream S23 is 1 frame, with startup delay being 0.

The bitstream S28 (S25), obtained on encoding the picture signals S25 entered from the decoder 6 and the picture coding type, contains an array ofpictures I02, B00, B01, P04 and P05. This bitstream S28 is delayed by four frames.

The buffer 7 is fed with a GOP-n, which is an in-point side GOP constituted by pictures In2, Bn0, Bn1, Pn5, Bn3, Bn4, Pn8, Bn6, Bn. This bitstream S24 is decoded by the decoder 8 and turned into picture signals. These picture signals contain Fn0, Fn1, Fn2, Fn3, Fn4, Fn5, Fn6, Fn7 and Fn8.

The picture coding types, allocated to the frames, Fn5 to Fn8, among the above pictures, are I, B, B, P, in agreement with the types of the original pictures. The delay of picture signals S24 from the bitstream S26 is 1 frame, with startup delay being 0.

The bitstream S28 (S26 input), obtained on encoding the picture signals S26 entered from the decoder 8 and the picture coding type, contains an array of pictures In5, Pn8, Bn6 and Bn8. This bitstream S28 is delayed by four frames.

The delay circuit 3, fed with a GOP GOP-(n+1), is delayed by four frames and is outputted as a bitstream S30.

The bitstream S28 from the encoder 4 and the bitstream S30 from the delay circuit 3 are switched by the switch SW2 under control by the control circuit 11, so that the GOP GOP(n+1), next following I02, B00, B01, P04, B03, In5, Pn8, Bn6 and Bn8, constituted by the GOP GOP-new-0 obtained on re-encoding the GOP GOP-0 and the GOP-new-n obtained on re-encoding the GOP GOP-n, is now the output bitstream S31.

Meanwhile, the present invention is not limited ti the above-described embodiment. For example, the recording medium according moving picture data to the moving picture encoding device is not limited to an optical disc, with the output signal form not being limited to IEEE1394.

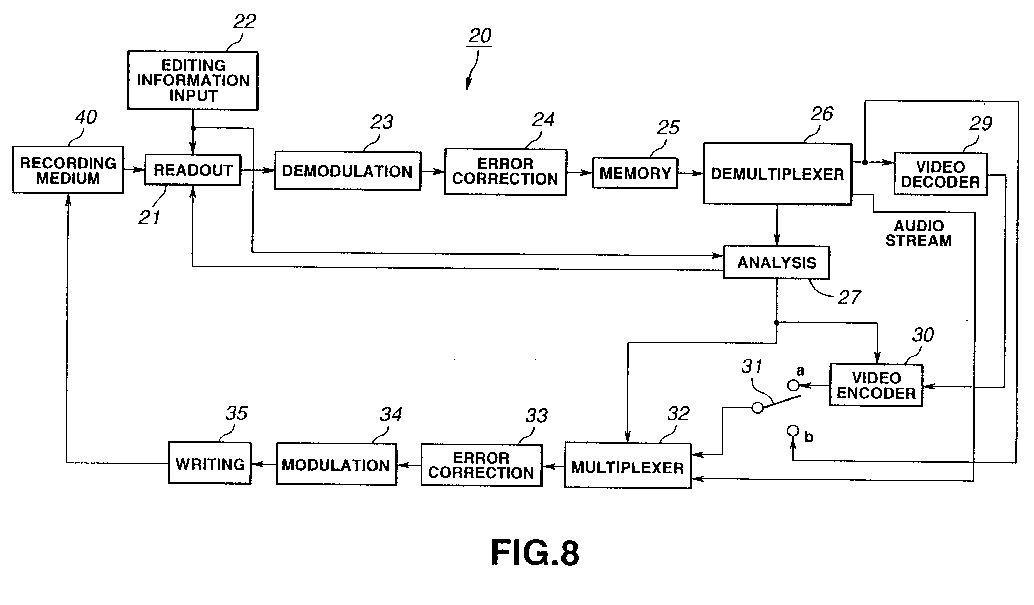

A second embodiment ofthe present invention is hereinafter explained. In the present second embodiment, the present invention is directed to a moving picture recording/reproducing apparatus 20, shown for example in Fig.8.

When editing a bitstream, already recorded on a recording medium 40, the moving picture recording/reproducing apparatus 20 re-encodes video data to record the re-encoded video data on a recording medium 40 in order to enable the editing point (the point from the tout-point picture to the in-point picture) to be reproduced seamlessly.

The out-point picture (out-point) means the last picture of one of two stories being edited to a sole stream. The in-point picture (in-point) means a first picture of the other of the two stories. That is, the moving picture recording/reproducing apparatus 20 re-encodes video data to enable seamless reproduction from the out-point to the in-point.

Specifically, the moving picture recording/reproducing apparatus 20 includes a read-out unit 21, for reading out data from the recording medium 40, an editing information input unit 22, to which the information of a picture to be edited is entered, a demodulation circuit 23, an error correction circuit 24 for error correction, a buffer memory 25 for transient storage of a bitstream, a demultiplexer 26 for separating a bitstream to a video stream and an audio bitstream, and an analysis unit 27.

When the user desires to edit a video program recorded on the recording medium 40, the editing information input unit 22 sends the editing information on the out-point and the in-point to the read-out unit 21 and to the analysis unit 27.

The read-out unit 21 sends data read out from the recording medium 40 via the demodulation circuit 23 and the error correction circuit 24 to the buffer memory 25. The demultiplexer 26 read out a bitstream stored in the buffer memory 25 to send it first to the analysis unit 27 to split the bitstream into a video stream and an audio stream in order to send the video stream to a video decoder 29 and to a terminal b of a switching circuit 31 and in order to send the audio stream to a multiplexer 32 as later explained.

The analysis circuit 27 analyzes a bitstream from the demultiplexer 26 and vbv_delay, which is a parameter defined by a picture header of the MPEG video and which indicates the initial state ofthe buffer at the time of random accessing, to select the method for re-encoding a video stream (change of the picture coding type or allocation of the encoding bit quantity at the time ofre-encoding) and the method for re-multiplexing to control the video encoder 30 and the multiplexer 32 in accordance with the selected contents.

The moving picture recording/reproducing apparatus 20 also includes a video decoder 29 for decoding a video stream, a video encoder 30 for encoding video data, a switching circuit 31 for switching between source video streams, a multiplexer 32 for multiplexing the stream and an error correction circuit 33 for appending an error correction code. The moving picture recording/reproducing apparatus 20 further includes a modulation circuit 34 for modulating a bitstream and a writing unit 35 for writing a bitstream on the recording medium 40.

The video decoder 29 decodes the video stream to send the video data to the video encoder 30, which then encodes the video data with a bitrate under control by the analysis unit 27 to send the video stream to a terminal a ofthe switching circuit 31. The video decoder 29 and the video encoder 30 are used for re-constructing GOPs containing an in-point and an out-point and GOPs lying ahead and at back of the firstly-stated GOPs.

The switching circuit 31 is constructed so as to be set to its terminals a or b in case of re-encoding or otherwise, respectively. The switching circuit 31 outputs one of the video streams sent to the terminals a or b to send the selected video stream to the multiplexer 32.

The multiplexer 32 multiplexes the video stream from the switching circuit 31 and the audio stream from the demultiplexer 26 to generate a bitstream which is sent via error correction circuit 33 and the modulation circuit 34 to the writing unit 35.

The writing unit 35 records the bitstream from the modulation circuit 34 on the recording medium 40.

When re-encoding the video on the out-point side and the in-point side to effect continuous reproduction from the out-point side video to the in-point side video, caution must be exercised not to cause failure of the VBV buffer which is a buffer of an imaginary decoder defined on the MPEG. It is noted that failure of the VBV buffer means overflowing or underflowing of the buffer.

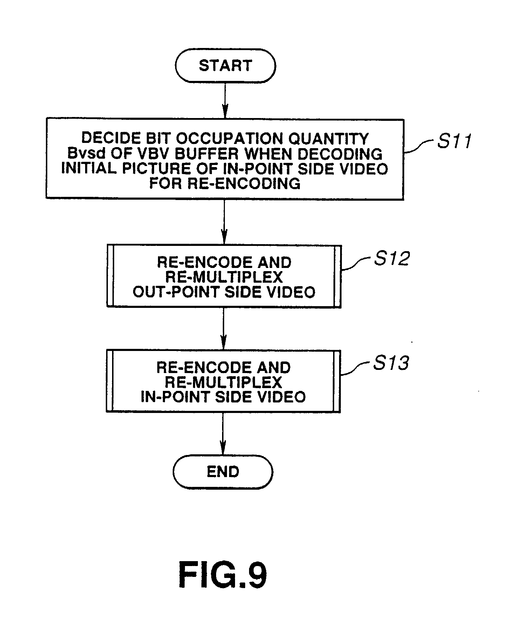

In the above-described moving picture recording/reproducing apparatus 20, the analysis unit 27 controls the video encoder 30 and the multiplexer 32 in accordance with the flowchart shown in Fig.9 to effect re-encoding and multiplexing.

The analysis unit 27 decides the initial bit storage quantity Bvsd of the VBV buffer when decoding the first picture of the in-point side video to be re-encoded (step S11). As the initial bit storage quantity Bvsd, any suitable value may be set depending on the application used. For example, the initial bit storage quantity Bvsd may be the maximum value of the VBV buffer, which is 1.75 Mbits for MPEG2MP@ML. The analysis unit 27 controls the video encoder 30 and the multiplexer 32 to re-encode and re-multiplex the out-point side video (step S12) and subsequently to re-encode and multiplex the in-point side video (step S13).

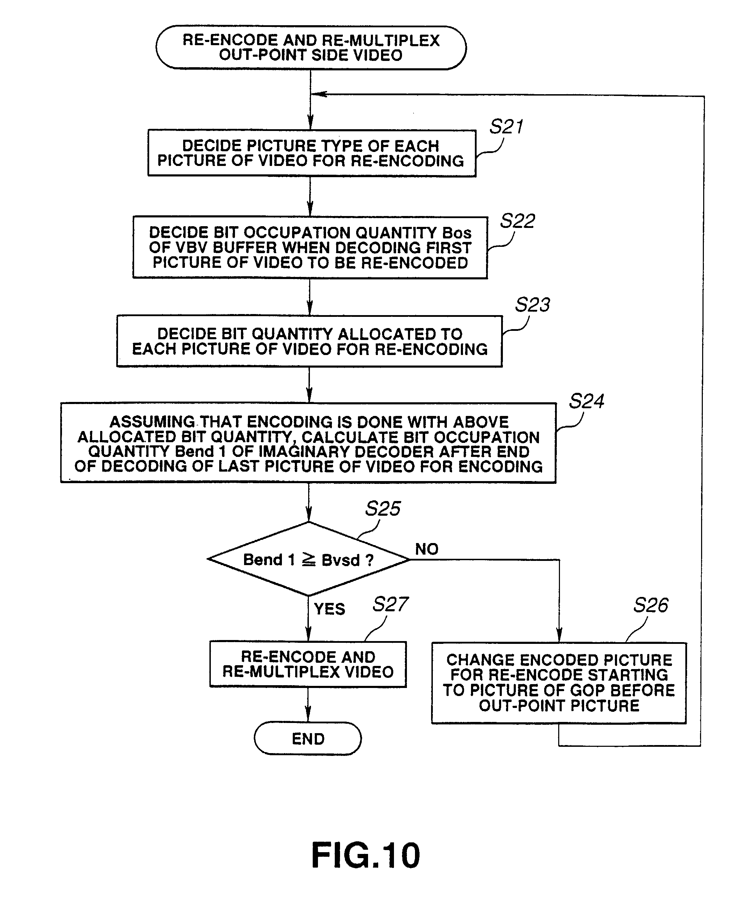

At the above step S12, the analysis unit 27 controls the re-encoding and multiplexing of the out-point in accordance with the flowchart shown in Fig.10.

At step S21, the analysis unit 27 sets the picture type of the respective pictures of the video to be re-encoded, before proceeding to step S22.

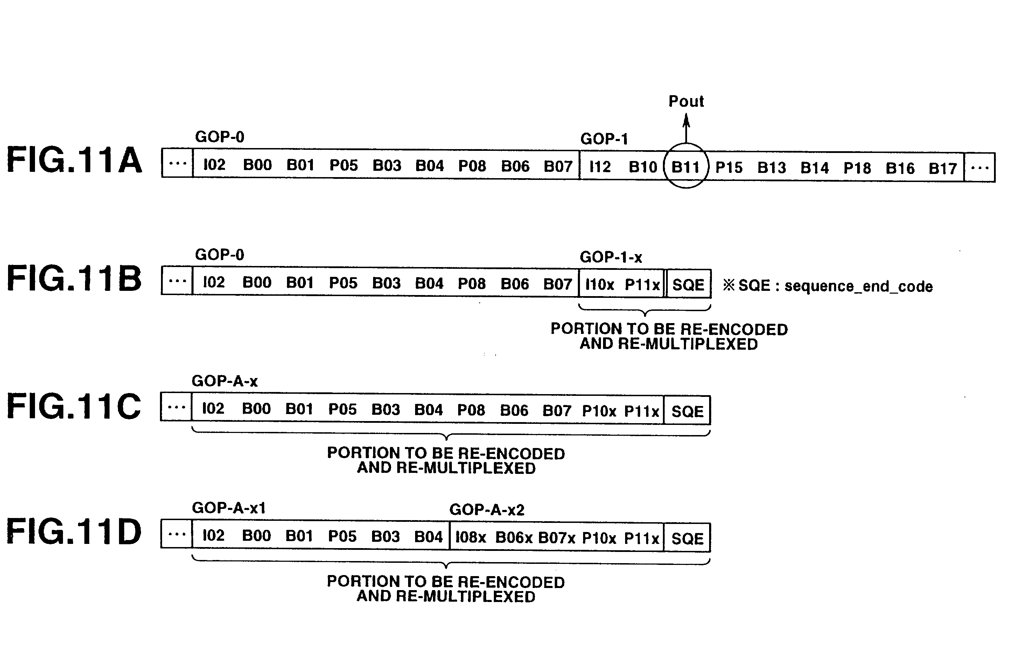

It is assumed that the video stream before re-encoding is constructed as shown for example in Fig.11A, and is recorded in the display sequence of GOP-0, GOP-1, ^{...} on the recording medium 40. The symbols I, P and B denote I-, P- and B-pictures, while the numbers next following the suffixes I, P and B denote the picture display sequence in the GOP. In the GOP GOP-0, for example, the bitstream is constructed in the sequence of I12, B10, B11, ^{...}, however, the pictures displayed following the decoding are arrayed in the sequence of B10, B11, B12, ^{...} The re-encoding when the user designates B11 of the GOP GOP-1 as an out-point picture Pout is now explained.

If the processing of step S1 is done for the first time. The picture B10 is set as an I-picture, a picture B11 is set as a P-picture and other pictures are set as shown in Fig.11B, so that only the GOP GOP-1 will be re-encoded. If the processing of step S21 is done following the step S26, the picture types of the respective pictures of the respective GOPs are determined so that the GOPs GOP-0 and GOP-1 will be re-encoded.

At step S22, the bit storage quantity Bos of the VBV buffer when decoding the first picture of the video to be re-encoded is determined, before processing transfers to step S23. This quantity is calculated from the value of vbv_delay of the first encoded picture of an original GOP GOP-1.

At step S23, the analysis unit 27 sets the allocated bit quantity ofthe respective pictures of the video to be encoded before proceeding to step S24.

At step S24, the analysis unit 27 assumes that the encoding is done with the above-described allocated bit quantity and calculates the bit storage quantity Bendl of the virtual decoder after the end of decoding in the last picture of the video for encoding. Then, processing transfers to step S25.

At step S25, the analysis unit 27 judges whether or not Bendl is not less than the initial bit storage quantity Bvsd. If it is found that Bend1 is not less than the initial bit storage quantity Bvsd, processing transfers to step S27 and, if otherwise, to step S26.

At step S26, the analysis unit 27 changes the encoded picture, at which re-encoding should be started, to a GOP picture ahead of the out-point picture, to then revert to step S21. The analysis unit 27 at step S21 decides the picture type to then perform the processing downstream of the step S22, as described above.

At step S27, the analysis unit 27 controls the video encoder 30 and the multiplexer 32 to re-encode and multiplex the video to terminate the processing at step S12 as described above. The control contents ofthe analysis unit 27 differs depending on whether or not the processing has gone through the step S26.

Specifically, if the processing has transferred to step S27 without passing through step s26, the analysis unit 27 re-encodes only the GOP containing an out-point, that is GOP-1, and controls the video encoder 30 to generate the GOP GOP-1-x, as shown in Fig.11B. That is, the video encoder 30 re-encodes B10 of the GOP GOP-1 to I10x of an I-picture, while re-encoding the out-point picture B11 to P11x of the P-picture to generate a new GOP GOP-1-x. That is, the video encoder 30 re-encodes the GOP GOP-1, containing the picture of the out-point B11, to a GOP GOP-1-x, made up of pictures I10x and P11x, so that the picture lying at back of the out-point picture, for example, I12 or B13 in the GOP GOP-1, is not used for reference for prediction in decoding. Meanwhile, the SQE sequence_end_code ofthe GOP GOP-1-x denotes the end of the GOP.

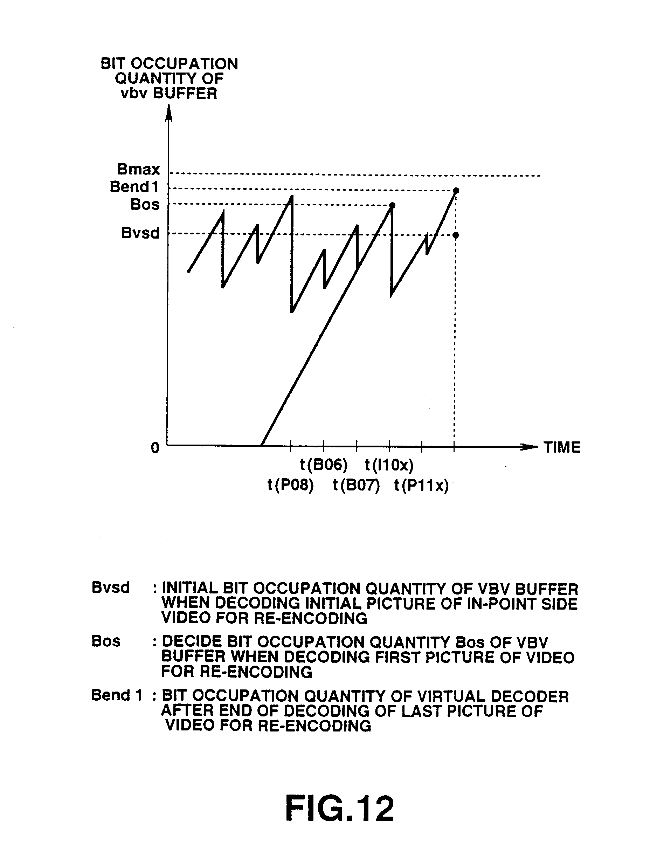

The bit storage quantity ofthe buffer of the virtual decoder is changed as shown in Fig.12, in which the ordinate stands for the bit storage quantity in the buffer, Bmax is the maximum bit quantity in the buffer and the abscissa stands for lapse of time. The time t(*) denotes the decoding time of an encoded picture. For example, t(P08) denotes the decoding time of P08. The rightwardly rising straight line denotes the input bitrate to the buffer. For example, since t(P08) until time t(B06), the bitstream is entered to the buffer so that the bit storage quantity in the buffer is increased. At the decoding time of each encoded picture, the bit quantity of the encoded picture in question is instantly removed from the buffer to decrease the bit storage quantity in the buffer. The decreased bit storage quantity at each decoding time differs with the picture type and becomes larger in the sequence of the I-, P- and B-pictures.

In this case, it is seen that, if the quantity of the allocated bits for each of the pictures I10x and I11x of the GOP GOP-1-x is determined as shown in Fig.12, the bit storage quantity Bendl is not less than the initial bit storage quantity Bvsdl, from the outset, such that it is sufficient if the GOP GOP-1 is directly re-encoded.

If the processing has proceeded to step S27 through step S26, the analysis unit 27 is able to encode the out-point by two modes as now explained. Which of these modes is to be selected depends on whether or not the maximum length of the GOP is limited by the application.

As the first mode, the video encoder 30 re-encodes the GOPs GOP-0 and GOP-1 to a sole GOP GOP-A-x, as shown in Fig.11C. In this GOP GOP-A-x, the pictures I02 to B07 of the GOP GOP-0 are directly copied into the GOP GOP-A-x. The pictures B10 and B11 of the GOP GOP-1 are re-encoded to P10x and P11x of the P-pictures. That is, the video encoder 30 re-encodes the respective pictures of the GOP GOP-1 up to the out-point into inter-picture predictive-coded pictures, that can be predicted from the pictures of the GOP GOP-0 and part of the pictures of the GOP GOP-1, while generating a new GOP GOP-A-x that can be decoded without predictive reference to the pictures lying in back of the out-point picture, such as I13 or P15.

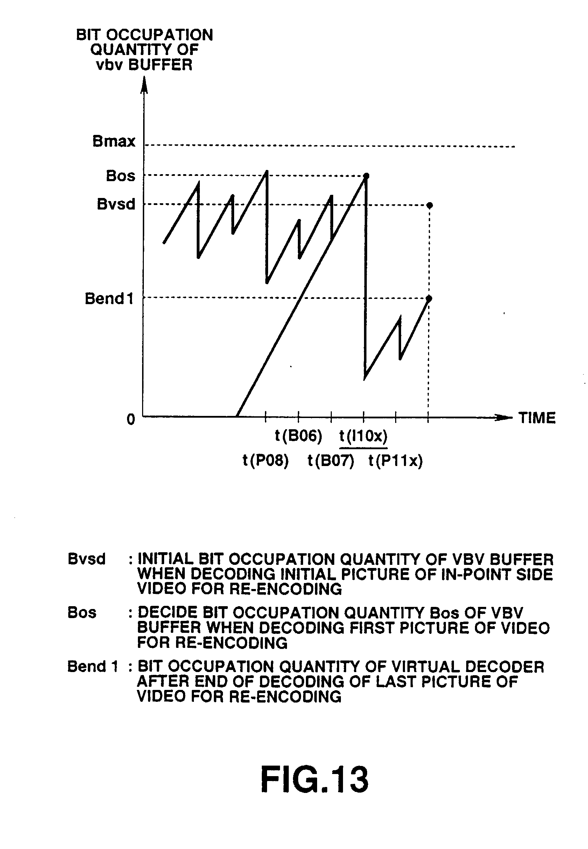

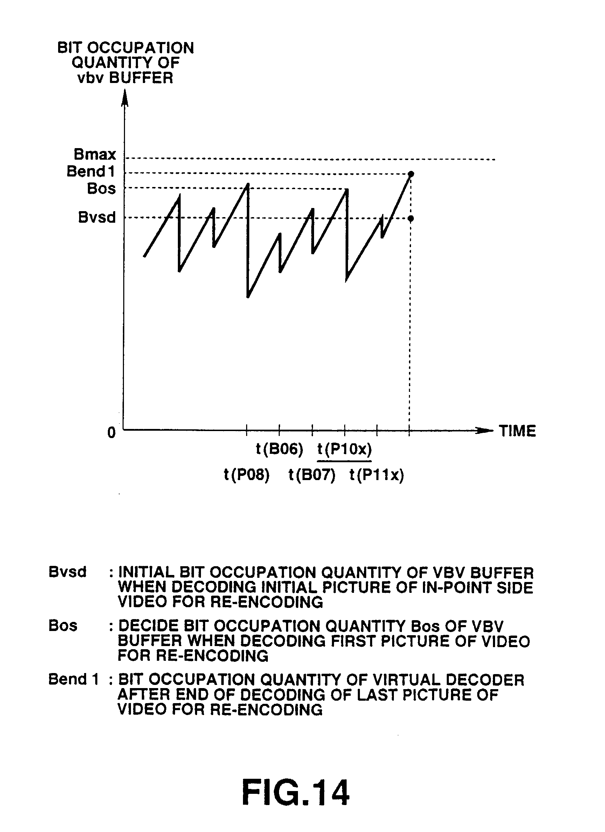

If assumed that the GOP GOP-0 is not re-encoded, the bit storage quantity of the buffer of the virtual decoder is changed as shown in Fig.13 such that Bendl is smaller than the initial bit storage quantity Bvsd. That is, if the quantities of allocated bits to the pictures I10x, P11x of the GOP GOP-1-x are decoded at step S23, Bendl < Bvsd. The video encoder 30 thus changes the encoded picture at which to start the ere-encoding to a picture of a GOP directly ahead of the GOP containing the out-point picture. By re-encoding the original picture B11 to a P-picture instead of to the I-picture, the bit storage quantity in the buffer can be reduced only to a lesser extent, asa result ofwhich Bendl can be rendered larger than the initial bit storage quantity Bvsd, as shown in Fig.14.

As a second embodiment, the video encoder 30 re-encodes two GOPs, that is GOP-0 and GOP-1, to GOPs GOP-A-x1 and to GOP-A-x2, as shown in Fig.11D. In the GOP GOP-0, the pictures I02 to B04 are directly copied into the GOP GOP-A-x1. P08, Bo6 and B07 are re-encoded to I08x, B06x, B07x in the GOP GOP-A-x2. In the GOP GOP-1, B10 and b11 are re-encoded to P10x, P11x in the GOP GOP-A-x2. That is, the video encoder 30 is able to re-encode the pictures of the GOP containing the out-point picture to inter-picture predictively coded pictures predicted from the picture of the GOP GOP-0 to generate new GOPs, that is GOP-A-x1 and GOP-A-x2, so that decoding will be possible without reference for prediction to the pictures lying in back of the out-point picture. Meanwhile, the GOP GOP-A-x1 and GOP-A-x2 are two GOPs produced from the above-mentioned GOP-A-x.

The second mode is used when limitations are imposed on the maximum length of the GOP. It is assumed here that the maximum GOP length is limited to five pictures. That is, the first mode or the second mode may be used if the maximum length of the GOP is limited or otherwise, respectively.

The analysis unit 27 performs control so that the bit occupation quantity Bendl will not be lower than the initial bit storage quantity Bvsd to prevent buffer failure and consequent overflowing or underflowing of the buffer.

It is then assumed that the in-point is to be re-encoded.

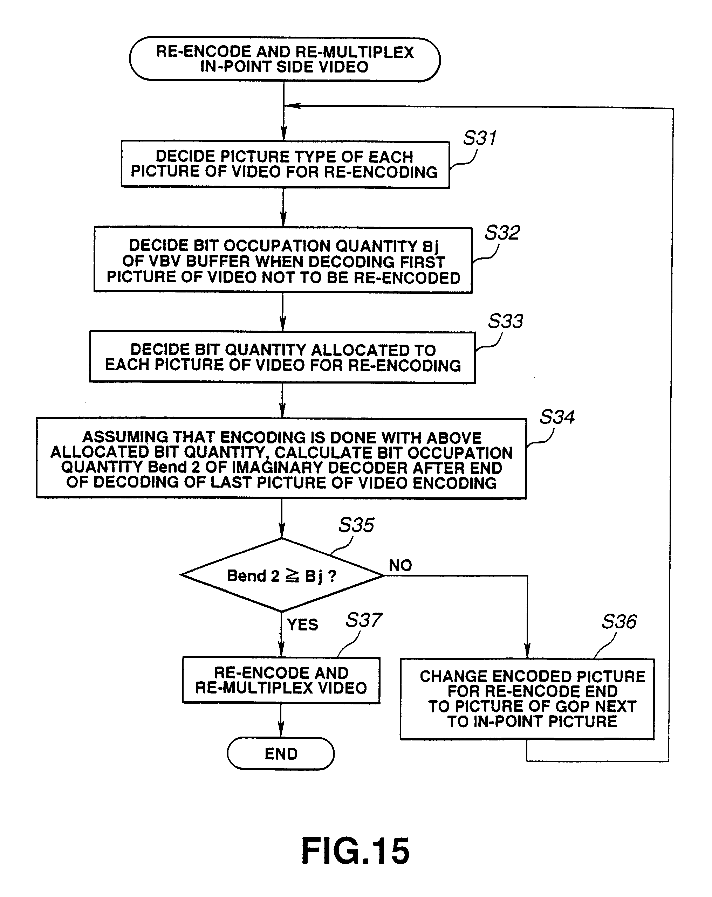

As a specified processing at step S13 shown in Fig.9, the in-point re-encoding processing is controlled in accordance with the flowchart shown in Fig.15.

At step S31, the analysis unit 27 sets the video picture type to be encoded to proceed to step S32.

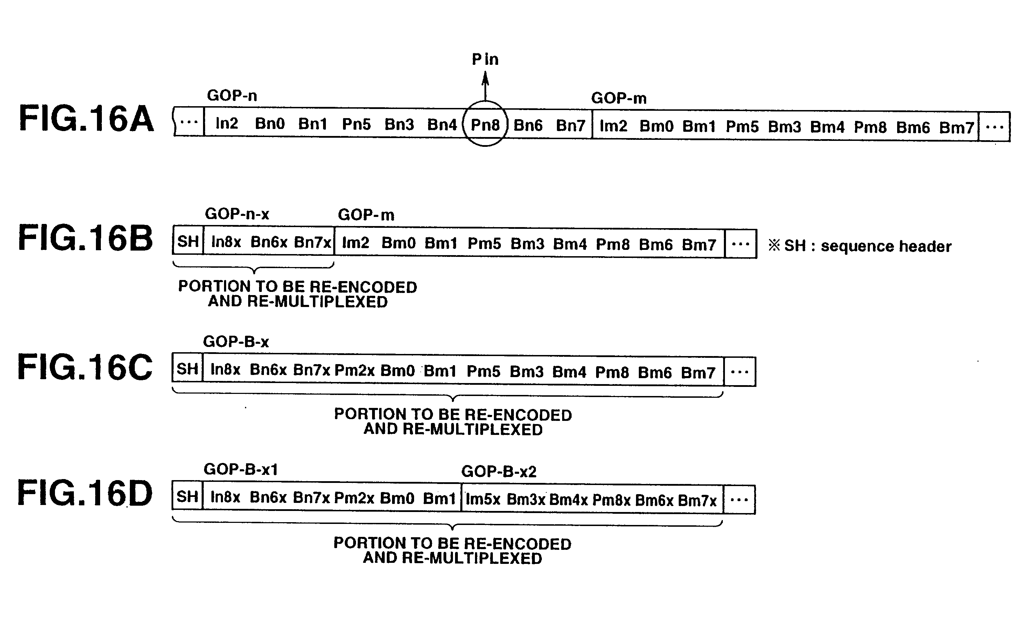

It is assumed that a video stream prior to re-encoding is constructed as shown in Fig.16A and is recorded on the recording medium 40 in the display sequence of GOP-n, GOP-m, ^{...}. As for the suffixes, such as I, P or B, the right-side suffixes denote the GOP to which belongs the picture in question, while the left-side suffixes denote the sequence of pictures in the GOP in question displayed after decoding. For example, Bn3 is a B-picture belonging to the GOP GOP-n, and is displayed in the third place in the GOP GOP-n. The re-encoding in case the user specifies the picture Pn8 of the GOP GOP-n as the in-point picture Pin is explained.

As for the decision of the picture type, if the processing of step S31 is carried out for the first time, the picture types are set so that the pictures Pn8, Bn6 and Bn7, for example, are set to an I-picture, a B-picture and to a B-picture, so that re-encoding will be performed only for the GOP GOP-n, as shown in Fig.16B. If the processing at step S31 is not the first processing, the picture types are set for the respective pictures of the GOPs, for doing the re-encoding of the GOPs GOP-n and GOP-m, as shown in Fig.16C.

At step S32, the analysis unit 27 calculates the initial bit storage quantity Bj of the VBV buffer when decoding the first picture of the video not re-encoded, such as Im2, before processing transfers to step S33. Since the picture Pn8 is the in-point picture, the GOP not re-encoded is the GOP GOP-m. Thus, the initial bit storage quantity Bj at the decoding time is calculated for the first picture Im ofthe GOP GOP-m. The initial bit storage quantity Bj is calculated from the value of vbv_delay of the picture Im2, for example, of the GOP GOP-m.

At step S33, the analysis unit 27 sets the quantity of allocated bits of the respective video pictures to be re-encoded before proceeding to step S34.

At step S34, the analysis unit 27 assumes that the encoding is to be performed with the as-set quantity of the allocated bits, and calculates the bit storage quantity Bend2 of the virtual decoder on decoding the last video picture to be re-encoded, before proceeding to step S35.

At step S35, the analysis unit 27 verifies whether or not the bit storage quantity Bend2 at step S34 is larger than the bit storage quantity Bj. If the bit storage quantity Bend2 is larger than the bit storage quantity Bj, processing transfers to step S37 and, if otherwise, processing transfers to step S36.

At step S36, the analysis unit 27 alters the encoded picture to be re-encoded for the last time to a picture of the GOP next following the in-point picture to then revert to step S31. The analysis unit 27 at step S31 sets the picture type shown in Fig.16C to then perform the processing as from step S32.

At step S37, the analysis unit 27 controls the video encoder 30 and the multiplexer 32 to re-encode and multiplex the video to terminate the processing at step S13 described above. The control contents of the analysis unit 27 at this time differ depending on whether or not the processing has passed through step S36.

Specifically, if the processing has proceeded to step S37 without passing through step S36, the analysis unit 27 re-encodes only the GOP-n containing the in-point and controls the video encoder 30 to generate the GOP GOP-n-x, as shown in Fig.16B. At this time, the video encoder 30 performs re-encoding to generate a new GOP GOP-n-x so that the pictures Pn8, as an in-point picture, Bn6 andBn7 will be In8x of an I-picture, Bn6x of a B-picture and Bn7x of a B-picture, respectively, to generate a new GOP GOP-n-x. That is, the GOP GOP-n containing the in-point picture Pn8 are re-encoded to GOP-n-x containing pictures In8x, Bn6x and Bn7x, so that the pictures ahead of the in-point picture, such as Bn3 or Bn4 in the GOP GOP-n, can be decoded without reference for prediction. Meanwhile, the sequence_header (SH) of the GOP GOP-n-x denotes the beginning of the GOP in question.

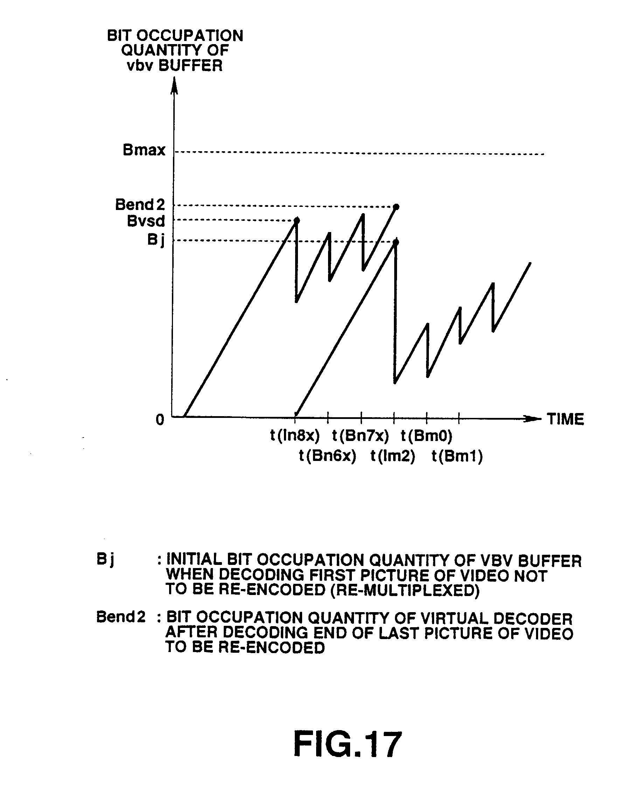

At this time, the bit storage quantity of the buffer of the virtual buffer is changed as shown in Fig.17.

If, is this case, the bit storage quantity Bend2 is not less than the initial bit storage quantity Bj from the outset, and if solely the GOP GOP-n is re-encoded, there is no risk of the failure of the VBV buffer.

If conversely the processing has proceeded to step S39 via step S36, the analysis unit 27 controls the video encoder 30 so that the out-point will be re-encoded in two modes as now explained. Which of these two modes will be selected depends on whether or not limitations have been imposed on the maximum GOP length by the application.

As the first mode, the video encoder 30 re-encodes the GOPs GOP-n and GOP-m to a sole GOP GOP-B-x, as shown in Fig. 16C. Specifically, the video encoder 30 re-encodes the pictures Pn8, Bn6, Bn7 of the GOP GOP-n to In8x, Bn6x and Bn7x while also re-encoding the Im2 of the GOP GOP-m to Pm2x and re-encoding the picture at back of Im2 of the GOP GOP-m to the same picture type as that of the original picture.

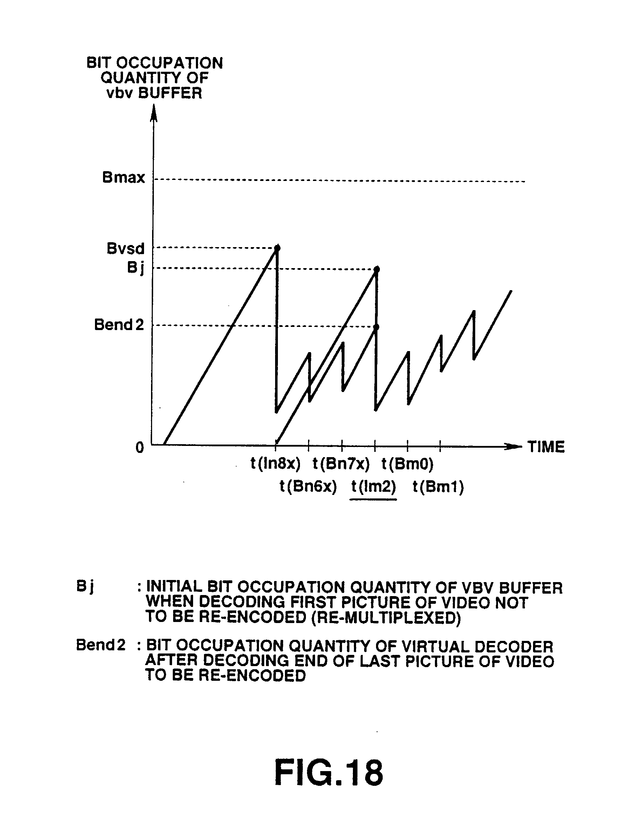

If it is assumed that the GOP GOP-m is not re-encoded, the bit storage quantity of the buffer of the virtual decoder is changed as shown in Fig.18, such that Bend2 is smaller than the initial bit storage quantity Bj. That is, if the quantity of bit allocation for pictures InBx, Bn6x, Bn7x of the GOP GOP-n-x is set at step S32, Bend2 < Bj, such that re-encoding cannot be done to give a continuous trajectory ofthe bit storage quantities for the GOPs GOP-n-x and GOP-m. If the video encoder 30 re-encodes the original picture Im2 to a picture Pm2x instead of to an I-picture, the bit storage quantity required by the buffer can be diminished to enable re-encoding to give a continuous trajectory of the bit storage quantity of the in-point side video buffer.

In the second mode, the video encoder 30 re-encodes two GOPs, that is GOP-n and GOP-m, to GOPs GOP-B-x1 and GOP-B-x2, as shown in Fig.16D. The video encoder 30 re-encodes Pn8, Bn6, Bn7 of the GOP GOP-n to In8x, Bn8x and Bn7x, respectively, while re-encoding Im2, Bm0 and Bm1 to Pm2x, Bm0x and Bm1x, respectively. Also, the video encoder 30 re-encodes Pm5 ofthe GOP GOP-m to Im5x of the GOP GOP-B-x2, while also re-encoding the picture lying at back of Pm5 of the GOP GOP-m to the same picture type as that of the original picture.

Meanwhile, the GOPs GOP-B-x1 and GOP-B-x2 correspond to two GOPs of the GOP GOP-B-x.

Which of the first and second modes is to be selected is determined as discussed in connection with the out-point encoding. That is, it suffices if the first mode or the second mode is used when the maximum length ofthe GOP is limited or is not limited, respectively.

Thus, buffer failure can be prevented from occurrence by the analysis unit 27 performing control so that the bit storage quantity Bend2 will not be smaller than the initial bit storage quantity Bj.

It will be seen from above that if, with the moving picture recording/reproducing apparatus 20, the out-point side video and the in-point side video are re-encoded as described above, continuous reproduction from the re-encoded out-point side vide to the re-encoded in-point side video can be realized as normally without the risk of the failure of the virtual decoder buffer.

Although the foregoing embodiment is directed to formulation of a program edited at the time of skip editing specifying the out-point and the in-point, the present invention is also applicable to insertion editing. That is, in the insertion editing, the insertion start point and the insertion end point in the insertion destination side program are specified, after which a video sequence for insertion is newly encoded. The re-encoding method for the out-point side video according to the present invention can be applied at this time to the video re-encoding of the insertion start point of the insertion source side program. Also, the re-encoding method for the out-point side video according to the present invention can be applied to the video re-encoding of the insertion end point of the insertion source side program.

The in-point and out-point re-encoding processing, explained in connection with the first and second embodiments, can also be performed by installing a moving picture encoding controlling program stating the sequence ofthe above processing on the computer from a recording medium on which has been recorded the control program.

Specifically, the computer having the above control program installed thereon is functionally of a structure as shown in Fig.6 or 8, such that, if it is commanded to skip a portion of the moving picture program in reproducing the moving pictures, the program portions lying ahead and at back of the skipping start point can be efficiently encoded to realize the seamless reproduction of the program portions lying ahead and at back of the skipping start point.

## Claims

1. An encoding method for moving pictures for outputting moving picture signals up to an out-point picture in a display sequence of an encoded bitstream of moving pictures including a group of pictures beginning with an intra-picture encoded picture followed by a plurality of inter-picture predictive-coded pictures as a unit domain, comprising:
a re-constructing step for re-constructing the input video stream by re-encoding the pictures of the group of pictures containing said out-point picture beginning from the initial display picture of the group of pictures up to said out-point picture into inter- picture predictive-coded pictures that can be predicted from pictures of another group of pictures displayed directly before the group of pictures containing said out-point picture, for re-construction into a group of pictures that can be decoded without having predictive reference to display pictures lying at back of said out-point picture.

2. The moving picture encoding method according to claim 1 wherein said re-constructing step re-encodes the first intra-picture encoded picture in said group of pictures containing said out-point picture to a forwardly predictive- encoded picture that can be predicted from a picture of another group of pictures displayed directly before the group of pictures containing said out-point picture.

3. The moving picture encoding method according to claim 1 wherein said re-constructing step calculates an initial bit storage quantity required for a virtual buffer at the time of decoding the first encoded picture of the encoded moving picture signals displayed nest to said out-point picture;
said re-constructing step decodes the last picture for encoding, on the assumption that encoding is done with the quantity of allocated bits used in case of re-encoding the pictures of the group of pictures containing said out-point picture from its first display picture to said out-point picture to a sole group ofpictures, to calculate the quantity of stored bits at the time oftermination of decoding ofthe virtual decoder; and wherein
said re-constructing step re-encodes the pictures of said group of pictures containing the out-point picture from the first display picture to said out-point picture into a sole group of pictures if said quantity of stored bits at the time of termination of the decoding is not less than the initial bit storage quantity, said re-constructing step doing re-encoding to an inter-picture predicted encoded picture that is predicted from the picture of a group of pictures displayed directly before the group of pictures containing said out-point picture.

4. An encoding apparatus for moving pictures for outputting moving picture signals up to an out-point picture in a display sequence of an encoded bitstream of moving pictures including a group of pictures beginning with an intra-picture encoded picture followed by a plurality of inter-picture predictive-coded pictures, as a unit domain, comprising:
re-constructing means for re-constructing the input video stream by re-encoding the pictures of the group of pictures containing said out-point picture from the initial display picture up to said out-point picture into inter-picture predictive-coded pictures that can be predicted from pictures of another group of pictures displayed directly before the group of pictures containing said out-point picture, for re-construction into a group of pictures that can be decoded without having predictive reference to display pictures lying backwardly of said out-point picture.

5. The moving picture encoding apparatus according to claim 4 wherein said re-constructing means re-encodes the first intra-picture encoded picture in said group of pictures containing said out-point picture to a forwardly predictive- encoded picture that can be predicted from a picture of another group of pictures displayed directly before the group of pictures containing said out-point picture.

6. The moving picture encoding apparatus according to claim 4 wherein said re-constructing means calculates an initial bit storage quantity required for a virtual decoder buffer at the time of decoding the first encoded picture ofthe encoded moving picture signals displayed next to said out-point picture; wherein
said re-constructing means decodes the last picture for encoding, on the assumption that encoding is done with the quantity of allocated bits used in case ofre-encoding the pictures of the group of pictures containing said out-point picture from its first display picture to said out-point picture to a sole group ofpictures, to calculate the quantity of stored bits at the time of termination of decoding of the virtual decoder; and wherein
said re-constructing means re-encodes the pictures of said group of pictures containing the out-point picture from the first display picture to said out-point picture into a sole group of pictures if said quantity of stored bits at the time of termination of the decoding is not less than the initial bit storage quantity, said re-constructing means doing re-encoding to an inter-picture predictive-coded picture that is predicted from the picture of a group of pictures displayed directly before the group of pictures containing said out-point picture.

7. A recording medium having a control program recorded thereon, said control program outputting moving picture signals up to an out-point picture in a display sequence of an encoded bitstream of moving pictures including a group of pictures beginning with an intra-picture encoded picture followed by a plurality of inter-picture predictive-coded pictures, as a unit domain, wherein the improvement resides in that
said control program re-constructs the input video stream by re-encoding the pictures of the group of pictures containing said out-point picture from the initial display picture of the group of pictures up to said out-point picture into inter-picture predictive-coded pictures that can be predicted from pictures of another group of pictures displayed directly before the group of pictures containing said out-point picture, for re-construction into a group ofpictures that can be decoded without having predictive reference to display pictures lying backwardly of said out-point picture.

8. The recording medium according to claim 7 wherein the control program recorded thereon re-encodes the first intra-picture encoded picture in said group of pictures containing said out-point picture to a forwardly predictive-coded picture that can be predicted from a picture of another group of pictures displayed directly before the group of pictures containing said out-point picture.

9. The recording medium according to claim 7 wherein the control program recorded thereon calculates an initial bit storage quantity required for a virtual buffer at the time of decoding the first encoded picture of the encoded moving picture signals displayed next to said out-point picture; wherein
said control program decodes the last picture for encoding, on the assumption that encoding is done with the quantity of allocated bits used in case ofre-encoding the pictures of the group of pictures containing said out-point picture from its first display picture to said out-point picture to a sole group of pictures, to calculate the quantity of stored bits at the time of termination of decoding of the virtual decoder; and wherein
said control program re-encodes the pictures of said group of pictures containing the out-point picture from the first display picture to said out-point picture into a sole group of pictures if said quantity of stored bits at the time of termination of the decoding is not less than the initial bit storage quantity, said re-constructing means doing re-encoding to an inter-picture predictive-coded picture that is predicted from the picture of a group of pictures displayed directly before the group of pictures containing said out-point picture if said quantity of stored bits at the time of termination of the decoding is not less than the initial bit storage quantity.

10. An encoding method for moving pictures for outputting moving picture signals in a display sequence of an encoded bitstream of including a group of moving pictures beginning with an intra-picture encoded picture followed by a plurality of inter-picture predictive-coded pictures, as a unit domain, comprising:
a re-constructing step of re-constructing the input video stream by re-encoding the first intra-coded picture of a group of pictures displayed directly backwardly of a group of pictures containing said in-point picture to an inter-picture predictive-coded picture that is predicted from a picture of said group of pictures containing said in-point picture, for re-construction into a group of pictures that can be decoded without having predictive reference to display pictures lying ahead of said in-point picture.

11. The moving picture encoding method according to claim 10 wherein said re-constructing step re-encodes the first intra-picture encoded picture of a group of pictures displayed directly backwardly ofthe group ofpictures containing said in-point picture to a forwardly predicted encoded picture predicted from a picture of the group of pictures containing said in-point picture.

12. The moving picture encoding method according to claim 10 wherein said re-constructing step re-encodes a first forwardly predictive-coded picture lying backwardly of the in-point picture in the display sequence to an intra-picture encoded picture.

13. The moving picture encoding method according to claim 10 wherein said re-constructing step calculates an initial bit storage quantity required for a decoder buffer at the time of decoding a first encoded picture of a group of pictures next following said group of pictures containing said in-point picture in a display sequence;
said re-constructing step decodes the last picture for encoding, on the assumption that encoding is done with the quantity of allocated bits used in case of re-encoding the pictures ofthe group of pictures containing said in-point picture from the in-point picture to the last displayed picture, to a sole group of pictures, to calculate the quantity of stored bits at the time of termination of decoding ofthe virtual decoder; and wherein
said re-constructing step re-encodes the pictures of said group of pictures containing the in-point picture from the in-point picture to the last display picture into a sole group of pictures if said quantity of stored bits at the time of termination of the decoding is not less than the initial bit storage quantity, said re-constructing step re-encoding the first intra-picture coded picture ofthe group ofpictures displayed directly backwardly of said group of pictures containing the in-point picture to an inter-picture predictive-coded picture predicted from a picture of the group of pictures containing the in-point picture.

14. An encoding apparatus for moving pictures for outputting moving picture signals in a display sequence of an encoded bitstream of including a group of moving pictures beginning with an intra-picture encoded picture followed by a plurality ofinter-picture predictive-coded pictures, as a unit domain, comprising:
re-constructing means for re-constructing the input video stream by re-encoding the first intra-coded picture of a group of pictures displayed directly backwardly of a group of pictures containing said in-point picture to an inter-picture predictive-coded picture that is predicted from a picture of said group of pictures containing said in-point picture, for re-construction into a group of pictures that can be decoded without having predictive reference to display pictures lying ahead of said in-point picture.

15. The moving picture encoding apparatus according to claim 14 wherein said re-constructing means re-encodes the first intra-picture encoded picture of a group of pictures displayed directly backwardly ofthe group ofpictures containing said in-point picture to a forwardly predictive-coded picture predicted from a picture of the group of pictures containing said in-point picture.

16. The moving picture encoding apparatus according to claim 14 wherein said re-constructing means re-encodes a first forwardly predictive-coded picture lying backwardly of the in-point picture in the display sequence to an intra-picture encoded picture.

17. The moving picture encoding apparatus according to claim 14 wherein said re-constructing means calculates an initial bit storage quantity required for a decoder buffer at the time of decoding a first encoded picture of a group of pictures next following said group ofpictures containing said in-point picture in a display sequence;
said re-constructing means decodes the last picture for encoding, on the assumption that encoding is done with the quantity of allocated bits used in case ofre-encoding the pictures ofthe group ofpictures containing said in-point picture from the in-point picture to the last displayed picture to a sole group of pictures, to calculate the quantity of stored bits at the time of termination of decoding ofthe virtual decoder; and wherein
said re-constructing means re-encodes the pictures of said group of pictures containing the in-point picture from the in-point picture to the last display picture into a sole group of pictures if said quantity of stored bits at the time of termination of the decoding is not less than the initial bit storage quantity, said re-constructing means re-encoding the first intra-picture coded picture ofthe group ofpictures displayed directly backwardly of said group of pictures containing the in-point picture to an inter-picture predictive-coded picture predicted from a picture of the group of pictures containing said in-point picture if said quantity of stored bits at the time of termination of the decoding is less than the initial bit storage quantity.

18. A recording medium having a control program recorded thereon, said control program being formulated for outputting moving picture signals up to an in-point picture in a display sequence of an encoded bitstream of moving pictures including a group of pictures beginning with an intra-picture encoded picture followed by a plurality of inter-picture predictive-coded pictures, as a unit domain, wherein the improvement resides in that
said control program re-constructs the input video stream by re-encoding the first intra-picture coded picture of a group of pictures displayed directly backwardly ofthe group of pictures containing said in-point picture to an inter-picture predictive-coded picture predicted from a picture ofthe group ofpictures containing said in-point picture, for re-construction into a group ofpictures that can be decoded without having predictive reference to display pictures lying ahead of said in-point picture.

19. The recording medium according to claim 18 wherein said control program re-encodes the first intra-picture encoded picture ofa group of pictures displayed directly backwardly of the group of pictures containing said in-point picture to a forwardly predictive-coded picture predicted from a picture of the group of pictures containing said in-point picture.

20. The recording medium according to claim 18 wherein said control program re-encodes a first forwardly predictive-coded picture lying backwardly of the in-point picture in the display sequence to an intra-picture encoded picture.

21. The recording medium according to claim 18 wherein said control program calculates an initial bit storage quantity required for a decoder buffer at the time of decoding a first encoded picture of a group of pictures next following said group of pictures containing said in-point picture in a display sequence;
said control program also decodes the last picture for encoding, on the assumption that encoding is done with the quantity of allocated bits used in case ofre-encoding the pictures ofthe group of pictures containing said in-point picture from the in-point picture to the last displayed picture to a sole group of pictures, to calculate the quantity of stored bits at the time oftermination of decoding ofthe virtual decoder; said control program re-encoding the pictures of said group of pictures containing the in-point picture from the in-point picture to the last display picture into a sole group of pictures if said quantity of stored bits at the time of termination of the decoding is not less than the initial bit storage quantity,
said control program re-encoding the first intra-picture coded picture of the group of pictures displayed directly backwardly of said group of pictures containing the in-point picture to an inter-picture predictive-coded picture predicted from a picture of the group of pictures containing said in-point picture if said quantity of stored bits at the time of termination of the decoding is less than the initial bit storage quantity.

22. An encoding method for moving pictures for outputting signals for an input bitstream comprised of encoded picture signals made up of an intra-picture coded picture and a plurality of predictive-coded pictures predicted based on said intra-picture coded picture, as component elements, with a plurality of said encoded pictures constituting a group of pictures as a unit domain, said signals being said input bitstream skipping from a first point to a second point in a display sequence; comprising:
a re-constructing step of re-constructing, in an input bitstream, a group of pictures of a unit domain containing said first point up to said first point in a display sequence, and a group of pictures of a unit domain directly previous to said group of pictures containing said first point in the display sequence, into a first group of pictures that can be decoded without predictive reference to a picture lying backwardly of said first point, and of re-constructing pictures beginning from said second point in the display sequence of a group of pictures of a unit domain containing said second point, and another group of pictures of the unit domain directly following said group of pictures containing said second point in the display sequence, into a second group ofpictures that can be decoded without predictive reference to pictures lying forwardly of said second point.

23. The encoding method for moving pictures according to claim 22 wherein said predictive coded pictures are comprised of forwardly predictive-coded pictures in the picture display sequence and bidirectionally predictive-coded pictures in the display sequence.

24. The encoding method for moving pictures according to claim 22 further comprising:
a delay step of delaying the input bitstream at least for a time required for said re-constructing step.

25. An encoding apparatus for moving pictures for outputting signals for an input bitstream comprised of encoded picture signals made up of an intra-picture coded picture and a plurality of predictive-coded pictures predicted based on said intra-picture coded picture, as component elements, with a plurality of said encoded pictures constituting a group of pictures as a unit domain, said signals being said input bitstream skipping from a first point to a second point in a display sequence thereof; comprising:
re-constructing means for re-constructing, in an input bitstream, a group of pictures of a unit domain containing said first point up to said first point in a display sequence, and a group of pictures of a unit domain directly previous to said group of pictures containing said first point in the display sequence, into a first group of pictures that can be decoded without predictive reference to a picture lying backwardly of said first point, and ofre-constructing pictures beginning from said second point in the display sequence of a group of pictures of a unit domain containing said second point, and another group of pictures of the unit domain directly following said group of pictures containing said second point in the display sequence, into a second group of said second point.

26. A recording medium having recorded thereon a control program of outputting signals for an input bitstream comprised of encoded picture signals made up of an intra-picture coded picture and a plurality of predictive-coded pictures predicted based on said intra-picture coded picture, as component elements, with a plurality of said encoded pictures constituting a group of pictures as a unit domain, said signals being said input bitstream skipping from a first point to a second point in a display sequence thereof; wherein the improvement resides in that
said control program re-constructs, in an input bitstream, a group ofpictures of a unit domain containing said first point up to said first point in a display sequence, and a group of pictures of a unit domain directly previous to said group of pictures containing said first point in the display sequence, into a first group of pictures that can be decoded without predictive reference to a picture lying backwardly of said first point, said control program also re-constructing pictures beginning from said second point in the display sequence of a group of pictures of a unit domain containing said second point, and another group of pictures of the unit domain directly following said group of pictures containing said second point in the display sequence, into a second group of said second point.

27. An encoding method for moving pictures for outputting signals for an input bitstream, said input bitstream being comprised of encoded picture signals made up of an intra-picture coded picture, forwardly predictive-coded pictures, obtained on forward predictive coding in the display sequence, and a plurality of bidirectionally predictive-coded pictures, obtained on bidirectional predictive coding in the display sequence, with a plurality of said encoded pictures constituting a group of pictures as a unit domain, said signals being said input bitstream skipping from a first point to a second point in a display sequence thereof, comprising:
a re-constructing step of decoding a group of pictures of the unit domain containing said first point if said first point is the bidirectionally predictive-coded picture to re-encode pictures up to said first point in the display sequence, and of decoding a group of pictures of the unit domain containing said second point if said second point is a forwardly predictive-coded picture or a bidirectionally predictive-coded picture, to re-encode pictures lying backwardly of said second point in the display sequence.

28. The encoding method for moving pictures according to claim 27 further comprising:
a delay step of delaying the input bitstream at least for a time required for said re-constructing step.

29. An encoding apparatus for moving pictures for outputting signals for an input bitstream, said input bitstream being comprised of encoded picture signals made up of an intra-picture coded picture, forwardly predictive-coded pictures, obtained on forward predictive coding in the display sequence, and a plurality of bidirectionally predictive-coded pictures, obtained on bidirectional predictive coding in the display sequence, with a plurality of said encoded pictures constituting a group of pictures as a unit domain, said signals being said input bitstream skipping from a first point to a second point in a display sequence thereof, comprising:
re-constructing means for decoding a group of pictures of the unit domain containing said first point if said first point is the bidirectionally predictive-coded picture to re-encode pictures up to said first point in the display sequence, and for decoding a group of pictures of the unit domain containing said second point if said second point is a forwardly predictive-coded picture or a bidirectionally predictive-coded picture to re-encode pictures lying backwardly of said second point in the display sequence.

30. A recording medium having recorded thereon a control program formulated for outputting signals for an input bitstream, said input bitstream being comprised of encoded picture signals made up of an intra-picture coded picture, forwardly predictive-coded pictures, obtained on forward predictive coding in the display sequence, and a plurality of bidirectionally predictive-coded pictures, obtained on bidirectional predictive coding in the display sequence, with a plurality of said encoded signals constituting a group of pictures as a unit domain, said signals being said input bitstream skipping from a first point to a second point in a display sequence thereof, wherein the improvement resides in that
said control program decodes a group of pictures ofthe unit domain containing said first point if said first point is the bidirectionally predictive-coded picture to re-encode pictures up to said first point in the display sequence, said control program also decoding a group of pictures of the unit domain containing said second point if said second point is a forwardly predictive-coded picture or a bidirectionally predictive-coded picture to re-encode pictures lying backwardly of said second point in the display sequence.
